# EUROPEAN PATENT APPLICATION

(11) **EP 4 317 308 A1**
(43) Date of publication of application: **07.02.2024**
(21) Application number: 22781302.9
(22) Date of filing: 31.03.2022
(51) Int. Cl.: C08L 27/12, C08F 214/26, C08J 3/12, C08J 3/20, C08L 27/18

(54) **METHOD FOR PRODUCING FLUORORESIN COMPOSITION, FLUORORESIN COMPOSITION, AND MOLDED BODY**

(30) Priority: 31.03.2021 JP 2021060840
(71) Applicant: DAIKIN INDUSTRIES, LTD., Osaka-Shi, Osaka 530-0001 (JP)
(72) Inventor: MUKAE, Hirofumi, Osaka-Shi, Osaka 530-0001 (JP); KISHIKAWA, Yosuke, Osaka-Shi, Osaka 530-0001 (JP); YAMANAKA, Taku, Osaka-Shi, Osaka 530-0001 (JP); KATO, Taketo, Osaka-Shi, Osaka 530-0001 (JP); ITOH, Ryuo, Osaka-Shi, Osaka 530-0001 (JP); KUBOTA, Hiroki, Osaka-Shi, Osaka 530-0001 (JP)
(74) Representative: Hoffmann Eitle
(86) International application number: PCT/JP2022/016870
(87) International publication number: WO 2022/211093

(57) **Abstract**

Provided is a method for producing a fluororesin composition suffering less coloring and having excellent tensile properties while containing a fluororesin having a history of being heated to the melting point thereof or higher, the fluororesin composition, and a molded article obtainable from the fluororesin composition. The disclosure provides a method for producing a fluororesin composition, the method including: mixing a powder of a fluororesin A1 having a history of being heated to a melting point thereof or higher and an aqueous dispersion containing particles of a fluororesin B1 and having a solid concentration of 70% by mass or lower to provide a mixture; and drying the mixture to provide a fluororesin composition.

## Description

### TECHNICAL FIELD

The disclosure relates to methods for producing fluororesin compositions, fluororesin compositions, and molded articles.

### BACKGROUND ART

Polytetrafluoroethylene (PTFE) having a history of being heated to the melting point thereof or higher for processing such as molding fails to provide sufficient physical properties when it is directly reused as molding material, which causes partial recycling of such PTFE for the purpose of molding.

Patent Literature 1 and Patent Literature 2 disclose techniques relating to recycling of PTFE pulverized after firing or of heated PTFE.

### CITATION LIST

### - Patent Literature

Patent Literature 1: WO 2019/244433
Patent Literature 2: JP 2006-70233 A

### SUMMARY OF INVENTION

### - Technical Problem

The disclosure aims to provide a method for producing a fluororesin composition suffering less coloring and having excellent tensile properties while containing a fluororesin having a history of being heated to the melting point thereof or higher, the fluororesin composition, and a molded article obtainable from the fluororesin composition.

### - Solution to Problem

The disclosure provides a method for producing a fluororesin composition, the method including: mixing a powder of a fluororesin A1 having a history of being heated to a melting point thereof or higher and an aqueous dispersion containing particles of a fluororesin B1 and having a solid concentration of 70% by mass or lower to provide a mixture; and drying the mixture to provide a fluororesin composition.

The solid concentration of the aqueous dispersion is preferably 50% by mass or lower.

The aqueous dispersion preferably contains a hydrocarbon surfactant.

The hydrocarbon surfactant is preferably a fluorine-free hydrocarbon surfactant.

The hydrocarbon surfactant is preferably an anion surfactant or a nonionic surfactant.

The aqueous dispersion preferably contains a nonionic surfactant in an amount of 12% by mass or less relative to a solid content of the aqueous dispersion.

The nonionic surfactant preferably contains an ether bond.

The nonionic surfactant preferably includes at least one selected from the group consisting of an ether nonionic surfactant, a polyoxyethylene derivative, an ester nonionic surfactant, an amine nonionic surfactant, and a derivative thereof.

The disclosure also relates to a method for producing a fluororesin composition, the method including: mixing a powder of a fluororesin A1 having a history of being heated to a melting point thereof or higher and an aqueous dispersion containing particles of a fluororesin B1 and containing no hydrocarbon surfactant to provide a mixture; and drying the mixture to provide a fluororesin composition.

The fluororesin A1 preferably has at least one melting point within a temperature range lower than 333°C.

The fluororesin A1 is preferably polytetrafluoroethylene.

The fluororesin composition is preferably in the form of powder.

The production method may further include mixing a filler.

The disclosure also relates to a fluororesin composition obtainable by the production method.

The disclosure also relates to a fluororesin composition containing: a fluororesin A2 having a history of being heated to a melting point thereof or higher; and a fluororesin B2 having no history of being heated to a melting point thereof or higher, the fluororesin composition containing microparticles having a primary particle size of 1 um or smaller.

The fluororesin composition preferably has at least one melting point within a temperature range lower than 333°C and at least one melting point within a temperature range not lower than 333°C.

The microparticles preferably have an average aspect ratio of 2.0 or lower.

Microparticles having an aspect ratio of 2.5 or higher preferably represent 0.5% or more of a total number of the microparticles.

Preferably, the microparticles adhere to surfaces of a coarse powder having a particle size of 5 um or greater, with 60% or less of the surfaces of the coarse powder being exposed.

Preferably, a low molecular weight fluorine-containing compound is contained in an amount of 1 ppm by mass or less of the fluororesin composition.

A nonionic surfactant is preferably contained in an amount of 1.0% by mass or less of the fluororesin composition.

The fluororesin composition is preferably in the form of powder.

The fluororesin composition preferably has a tensile strength at break of 11 MPa or higher.

The fluororesin composition preferably has a tensile strain at break of 150% or higher.

The fluororesin composition preferably has a yellowness index of -1.0 or lower.

The fluororesin composition may further contain a filler.

The disclosure also relates to a molded article obtainable by compression-molding and firing the fluororesin composition.

### - Advantageous Effects of Invention

The disclosure can provide a method for producing a fluororesin composition suffering less coloring and having excellent tensile properties while containing a fluororesin having a history of being heated to the melting point thereof or higher, the fluororesin composition, and a molded article obtainable from the fluororesin composition.

### DESCRIPTION OF EMBODIMENTS

The disclosure is described in detail below.

The disclosure provides a method for producing a fluororesin composition (hereinafter, also referred to as a first production method), the method including: mixing a powder of a fluororesin A1 having a history of being heated to the melting point thereof or higher and an aqueous dispersion containing particles of a fluororesin B1 and having a solid concentration of 70% by mass or lower to provide a mixture (hereinafter, also referred to as a mixing step); and drying the mixture to provide a fluororesin composition (hereinafter, also referred to as a drying step).

In the first production method, an aqueous dispersion used has a solid concentration of 70% by mass or lower. Thus, the powder of the fluororesin A1 and the particles of the fluororesin B1 are uniformly mixed with each other. This results in production of a fluororesin composition suffering less coloring and having excellent tensile properties (e.g., tensile strength at break and tensile strain at break) while containing a fluororesin having a history of being heated to the melting point thereof or higher.

The fluororesin A1 in the first production method has a history of being heated to the melting point thereof or higher. The heating may be heating for molding or heat treatment, for example.

The fluororesin A1 preferably has a melting point of not lower than 100°C but lower than 333°C, more preferably lower than 332°C, still more preferably lower than 331°C.

The lower limit thereof is more preferably 140°C, still more preferably not lower than 180°C, although not limited thereto.

The fluororesin A1 preferably has at least one melting point within a temperature range lower than 333°C. The temperature range lower than 333°C is more preferably lower than 332°C, still more preferably lower than 331°C, while preferably 100°C or higher, more preferably 140°C or higher, still more preferably 180°C or higher.

A melting point within the above range indicates that the resin has a history of being heated to the melting point thereof or higher.

The fluororesin A1 may also have a melting point within a temperature range of 333°C or higher.

The melting point of a fluororesin herein is the temperature corresponding to the local minimum on a heat-of-fusion curve obtained by differential scanning calorimetry (DSC) at a temperature-increasing rate of 10°C/min using X-DSC7000 (available from Hitachi High-Tech Science Corp.). In the case where one melting peak includes two or more local minimums, each minimum is defined as a melting point.

Examples of the fluororesin A1 include polytetrafluoroethylene (PTFE), a tetrafluoroethylene (TFE)/perfluoro(alkyl vinyl ether) (PAVE) or perfluoro(alkyl allyl ether) copolymer (PFA), a TFE/hexafluoropropylene (HFP) copolymer (FEP), an ethylene (Et)/TFE copolymer (ETFE), an Et/TFE/HFP copolymer (EFEP), polychlorotrifluoroethylene (PCTFE), a chlorotrifluoroethylene (CTFE)/TFE copolymer, a CTFE/TFE/PAVE copolymer, an Et/CTFE copolymer, polyvinyl fluoride (PVF), polyvinylidene fluoride (PVdF), a vinylidene fluoride (VdF)/TFE copolymer, a VdF/HFP copolymer, a VdF/TFE/HFP copolymer, a VdF/HFP/(meth)acrylic acid copolymer, a VdF/CTFE copolymer, a VdF/pentafluoropropylene copolymer, a VdF/PAVE/TFE copolymer, and low molecular weight PTFE.

The fluororesin A1 is preferably a non-melt-flowable fluororesin.

The term "non-melt-flowable" herein means that the melt flow rate (MFR) is lower than 0.25 g/10 min, preferably lower than 0.10 g/10 min, more preferably 0.05 g/10 min or lower.

The MFR herein is a value obtained in conformity with ASTM D1238 using a melt indexer, as the mass (g/10 min) of a polymer flowing out of a nozzle (inner diameter: 2.095 mm, length: 8 mm) per 10 minutes at a measurement temperature specified according to the type of the fluororesin (e.g., 372°C for PFA and FEP, 297°C for ETFE) and a load specified according to the type of the fluororesin (e.g., 5 kg for PFA, FEP, and ETFE). For PTFE, the MFR is a value obtained by measurement under the same measurement conditions as for PFA.

Alternatively, a fluororesin may also be determined as being non-melt-flowable in the case where the thickness of a molded article prepared by compression-molding the fluororesin to provide a preformed article (non-fired molded article) and heating this preformed article at the melting point of the fluororesin or higher for one hour or longer is smaller than the thickness before heating by less than 20% or is greater than the thickness before heating.

The non-melt-flowable fluororesin is preferably the aforementioned PTFE. The PTFE may be a high molecular weight PTFE.

The PTFE as a fluororesin A1 may be a homopolymer of TFE or may be a modified PTFE containing 99.0% by mass or more of a polymerized unit based on TFE and 1.0% by mass or less of a polymerized unit based on a modifying monomer (hereinafter, also referred to as a "modifying monomer unit"). The modified PTFE may consist only of a polymerized unit based on TFE and a modifying monomer unit.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

The modifying monomer unit herein means a moiety that is part of the molecular structure of PTFE and is derived from a modifying monomer.

The modifying monomer may be any monomer copolymerizable with TFE, and examples thereof include: perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ether; perfluoroallyl ether; (perfluoroalkyl)ethylene; and ethylene. One modifying monomer may be used or a plurality of modifying monomers may be used.

Examples of the perfluorovinyl ether include, but are not limited to, unsaturated perfluoro compounds represented by the following formula (A):

CF₂=CF-ORf (A)

wherein Rf is a perfluoroorganic group. The term "perfluoroorganic group" herein means an organic group in which all hydrogen atoms bonded to any carbon atom are replaced by fluorine atoms. The perfluoroorganic group may contain an ether oxygen.

Examples of the perfluorovinyl ether include a perfluoro(alkyl vinyl ether) (PAVE) represented by the formula (A) wherein Rf is a C1-C10 perfluoroalkyl group. The perfluoroalkyl group preferably has 1 to 5 carbon atoms.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether also include:
those represented by the formula (A) wherein Rf is a C4-C9 perfluoro(alkoxy alkyl) group;
those represented by the formula (A) wherein Rf is a group represented by the following formula:

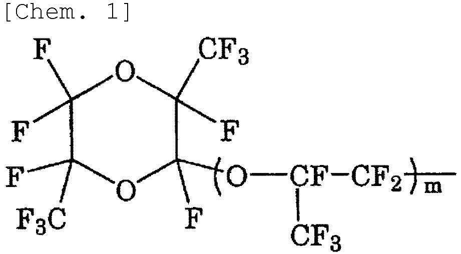

   wherein m is 0 or an integer of 1 to 4; and
those represented by the formula (A) wherein Rf is a group represented by the following formula: 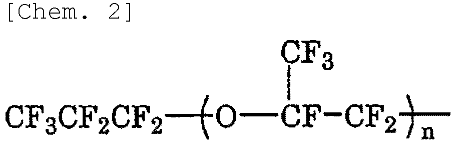 wherein n is an integer of 1 to 4.

Examples of the (perfluoroalkyl)ethylene (PFAE) include, but are not limited to, (perfluorobutyl)ethylene (PFBE) and (perfluorohexyl)ethylene.

Examples of the perfluoroallyl ether include fluoromonomers represented by the following formula (B):

CF₂=CF-CF₂-ORf¹ (B)

wherein Rf¹ is a perfluoroorganic group.

Rf¹ is preferably a C1-C10 perfluoroalkyl group or a C1-C10 perfluoroalkoxyalkyl group. The perfluoroallyl ether preferably includes at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, and is still more preferably CF₂=CF-CF₂-O-CF₂CF₂CF₃.

The PTFE as a fluororesin A1 preferably has a standard specific gravity (SSG) of 2.280 or lower, more preferably 2.10 or lower, while preferably 1.50 or higher, more preferably 1.60 or higher. The SSG is determined by the immersion method in conformity with ASTM D792 using a sample molded in conformity with ASTM D4895-89.

The PTFE as a fluororesin A1 commonly has non-melt secondary processibility. The non-melt secondary processibility means a property of a polymer such that the melt flow rate cannot be measured at a temperature higher than the melting point in conformity with ASTM D1238 and D2116, in other words, a property of a polymer such that it does not easily flow even within a melting point range.

The PTFE (high molecular weight PTFE) as a fluororesin A1 preferably has a melting point of 310°C or higher, more preferably 320°C or higher, while preferably lower than 333°C. The PTFE may also have a melting point within a temperature range of 333°C or higher.

The fluororesin A1 may contain a melt-flowable fluororesin.

The term "melt-flowable" herein means that the MFR is 0.25 g/10 min or higher, preferably 0.50 g/10 min or higher, more preferably 1.00 g/10 min or higher. The MFR may be 100 g/10 min or lower and is preferably 80 g/10 min or lower.

Alternatively, based on the thickness of a preformed article (non-fired molded article) prepared by compression-molding a fluororesin and the thickness thereof after heating at the melting point of the fluororesin or higher for one hour or longer, the fluororesin may also be determined as being melt-flowable in the case where the thickness after heating is smaller than the thickness before heating by 20% or more.

Examples of the melt-flowable fluororesin include the aforementioned PFA, FEP, ETFE, EFEP, PCTFE, CTFE/TFE copolymer, CTFE/TFE/PAVE copolymer, Et/CTFE copolymer, PVF, PVdF, VdF/TFE copolymer, VdF/HFP copolymer, VdF/TFE/HFP copolymer, VdF/HFP/(meth)acrylic acid copolymer, VdF/CTFE copolymer, VdF/pentafluoropropylene copolymer, VdF/PAVE/TFE copolymer, and low molecular weight PTFE. Preferred is at least one selected from the group consisting of PFA, FEP, and ETFE, more preferred is at least one selected from the group consisting of PFA and FEP.

The PFA as a fluororesin A1 contains a TFE unit and a PAVE unit or perfluoro(alkyl allyl ether) unit. Examples of the PAVE include monomers represented by the formula (A) wherein Rf is a C1-C10 perfluoroalkyl group. Examples of the perfluoro(alkyl allyl ether) include monomers represented by the formula (B) wherein Rf¹ is a C1-C10 perfluoroalkyl group.

The PFA is preferably, but not limited to, a copolymer in which the mole ratio of the TFE unit to the PAVE unit or perfluoro(alkyl allyl ether) unit ((TFE unit)/(PAVE unit or perfluoro(alkyl allyl ether) unit)) is not smaller than 70/30 but smaller than 99/1. The mole ratio is more preferably 70/30 or higher and 98.9/1.1 or lower, still more preferably 80/20 or higher and 98.9/1.1 or lower. The PFA is also preferably a copolymer containing a polymerized unit derived from a monomer copolymerizable with TFE and PAVE or perfluoro(alkyl allyl ether) in an amount of 0.1 to 10 mol% (i.e., the TFE unit and the PAVE unit or perfluoro(alkyl allyl ether) unit represent 90 to 99.9 mol% in total), more preferably 0.1 to 5 mol%, particularly preferably 0.2 to 4 mol%.

Examples of the monomer copolymerizable with TFE and PAVE or perfluoro(alkyl allyl ether) include: HFP; a vinyl monomer represented by the formula (I) : CZ¹Z²=CZ³ (CF₂)ₙZ⁴ (wherein Z¹, Z², and Z³ are the same as or different from each other and are each a hydrogen atom or a fluorine atom; Z⁴ is a hydrogen atom, a fluorine atom, or a chlorine atom; and n is an integer of 2 to 10); an alkyl perfluorovinyl ether derivative represented by the formula (II): CF₂=CF-OCH₂-Rf² (wherein Rf² is a C1-C5 perfluoroalkyl group); and an allyl ether monomer represented by the formula (III): CZ⁵Z⁶=CZ⁷CZ⁸Z⁹O-Rf³ (wherein Z⁵, Z⁶, and Z⁷ are the same as or different from each other and are each a hydrogen atom, a chlorine atom, or a fluorine atom; Z⁸ and Z⁹ are each a hydrogen atom or a fluorine atom; and Rf³ is a C1-C5 perfluoroalkyl group). Preferred examples of the allyl ether monomer include CH₂=CFCF₂-O-Rf³, CF₂=CFCH₂-O-Rf³, and CH₂=CHCF₂-O-Rf³ wherein Rf³ is defined as in the formula (III) .

Examples of the monomer copolymerizable with TFE and PAVE or perfluoro(alkyl allyl ether) also include unsaturated monocarboxylic acids, unsaturated dicarboxylic acids, and acid anhydrides of unsaturated dicarboxylic acids, such as itaconic acid, itaconic anhydride, citraconic anhydride, and 5-norbornene-2,3-dicarboxylic anhydride.

The PFA as a fluororesin A1 preferably has a melting point of 180°C to lower than 324°C, more preferably 230°C to 320°C, still more preferably 280°C to 320°C.

The FEP as a fluororesin A1 is preferably, but is not limited to, a copolymer in which the mole ratio of the TFE unit to the HFP unit ((TFE unit)/(HFP unit)) is not smaller than 70/30 but smaller than 99/1. The mole ratio is more preferably 70/30 or higher and 98.9/1.1 or lower, still more preferably 80/20 or higher and 98.9/1.1 or lower. The FEP is also preferably a copolymer containing a polymerized unit derived from a monomer copolymerizable with TFE and HFP in an amount of 0.1 to 10 mol% (i.e., the TFE unit and the HFP unit represent 90 to 99.9 mol% in total), more preferably 0.1 to 5 mol%, particularly preferably 0.2 to 4 mol%.

Examples of the monomer copolymerizable with TFE and HFP include PAVE, a monomer represented by the formula (III), and an alkyl perfluorovinyl ether derivative represented by the formula (II).

Examples of the monomer copolymerizable with TFE and HFP also include unsaturated monocarboxylic acids, unsaturated dicarboxylic acids, and acid anhydrides of unsaturated dicarboxylic acids, such as itaconic acid, itaconic anhydride, citraconic anhydride, and 5-norbornene-2,3-dicarboxylic anhydride.

The FEP as a fluororesin A1 preferably has a melting point of 150°C to lower than 324°C, more preferably 200°C to 320°C, still more preferably 240°C to 320°C.

The ETFE as a fluororesin A1 is preferably a copolymer in which the mole ratio of the TFE unit to the ethylene unit ((TFE unit)/(ethylene unit)) is 20/80 or higher and 90/10 or lower. The mole ratio is more preferably 37/63 or higher and 85/15 or lower, still more preferably 38/62 or higher and 80/20 or lower. The ETFE may be a copolymer containing TFE, ethylene, and a monomer copolymerizable with TFE and ethylene. Examples of the copolymerizable monomer include monomers represented by any of the formulas: CH₂=CX¹Rf⁴, CF₂=CFRf⁴, CF₂=CFORf⁴, and CH₂=C(Rf⁴)₂ (wherein X¹ is a hydrogen atom or a fluorine atom; and Rf⁴ is a fluoroalkyl group optionally containing an ether bond) and monomers represented by the formula (III). Preferred among these are fluorine-containing vinyl monomers represented by any of CF₂=CFRf⁴, CF₂=CFORf⁴, and CH₂=CX¹Rf⁴ and monomers represented by the formula (III). More preferred are HFP, a perfluoro(alkyl vinyl ether) represented by CF₂=CF-ORf⁵ (wherein Rf⁵ is a C1-C5 perfluoroalkyl group), a perfluoro(alkyl allyl ether) represented by CF₂=CF-CF₂-O-Rf³ (wherein Rf³ is a C1-C5 perfluoroalkyl group), and a fluorine-containing vinyl monomer represented by CH₂=CX¹Rf⁴ wherein Rf⁴ is a C1-C8 fluoroalkyl group. The monomer copolymerizable with TFE and ethylene may be an aliphatic unsaturated carboxylic acid such as itaconic acid or itaconic anhydride. The monomer copolymerizable with TFE and ethylene is preferably in an amount of 0.1 to 10 mol%, more preferably 0.1 to 5 mol%, particularly preferably 0.2 to 4 mol% of the fluorine-containing polymer.

The ETFE as a fluororesin A1 preferably has a melting point of 140°C to lower than 324°C, more preferably 160°C to 320°C, still more preferably 195°C to 320°C.

The low molecular weight PTFE is melt-flowable.

The low molecular weight PTFE preferably has a melt viscosity (complex viscosity) at 380°C of 1.0 × 10¹ to 1.0 × 10⁷ Pa·s.

The melt viscosity is more preferably 1.0 × 10² or higher, still more preferably 1.5 × 10³ Pa·s or higher, particularly preferably 7.0 × 10³ Pa·s or higher, while more preferably 7.0 × 10⁵ or lower, still more preferably 3.0 × 10⁵ Pa·s or lower, particularly preferably 1.0 × 10⁵ Pa·s or lower.

The "low molecular weight PTFE" herein means PTFE having a melt viscosity within the above range.

The melt viscosity is a value determined by heating a 2-g sample at 380°C for five minutes in advance and then keeping the sample at this temperature under a load of 0.7 MPa using a flow tester (available from Shimadzu Corp.) and a 2ϕ-8 L die in conformity with ASTM D1238.

The low molecular weight PTFE preferably has a MFR, which is obtained as the mass (g/10 min) of a polymer flowing out of a nozzle (inner diameter: 2.095 mm, length: 8 mm) per 10 minutes at a temperature of 372°C and a load of 5 kg, of 0.25 g/10 min or higher, more preferably 0.10 g/10 min or higher, still more preferably 0.05 g/10 min or higher. The MFR is also preferably 50 g/10 min or lower, more preferably 30 g/10 min or lower, still more preferably 10 g/10 min or lower.

The low molecular weight PTFE as a fluororesin A1 preferably has a melting point of not lower than 320°C but lower than 330°C.

The low molecular weight PTFE as a fluororesin A1 may be a homopolymer of TFE or may be a modified PTFE containing 99.0% by mass or more of a polymerized unit based on TFE and 1.0% by mass or less of a polymerized unit based on a modifying monomer (hereinafter, also referred to as a "modifying monomer unit"). The modified PTFE may consist only of a polymerized unit based on TFE and a modifying monomer unit.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

Examples of the modifying monomer include the monomers described above for the PTFE (high molecular weight PTFE) as a non-melt flowable fluororesin.

The amounts of the respective monomer units in the aforementioned polymer can be calculated by appropriate combination of NMR, FT-IR, elemental analysis, and X-ray fluorescence analysis in accordance with the types of the monomers.

The powder of the fluororesin A1 may contain secondary particles of the fluororesin A1.

The powder of the fluororesin A1 preferably have an average secondary particle size of 1 to 200 um. The average secondary particle size is more preferably 5 um or greater, still more preferably 10 um or greater, while more preferably 150 um or smaller, still more preferably 100 um or smaller, further preferably 70 um or smaller, particularly preferably 50 um or smaller, most preferably 30 um or smaller.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

The powder of the fluororesin A1 preferably have a D90 of 10 um or greater, more preferably 30 um or greater, still more preferably 50 um or greater, while preferably 600 um or smaller, more preferably 500 um or smaller, still more preferably 400 um or smaller.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

The powder of the fluororesin A1 is obtainable, for example, by compression-molding and firing a fluororesin having no history of being heated to the melting point thereof or higher and then pulverizing chips of the resulting molded article. The pulverization may be performed using a pulverizer, for example. The pulverization may include coarse pulverization and subsequent fine pulverization. The compression-molded article may have any shape. The firing may be performed at any temperature that is not lower than the melting point of the fluororesin. Any pulverizer may be used that can pulverize (preferably, finely pulverize) the chips. Examples thereof include an air jet mill, a hammer mill, a force mill, a millstone pulverizer, and a freeze pulverizer.

The powder of the fluororesin A1 is also obtainable, for example, by heating a powder of a non-melt-flowable fluororesin up to the melting point thereof or higher without compression molding, with the fluororesin having no history of being heated to the melting point thereof or higher, and then pulverizing the product using a pulverizer. The pulverizer is as described above.

The fluororesin B1 preferably has no history of being heated to the melting point thereof or higher. This enables production of a fluororesin composition capable of providing a molded article having much better physical properties.

The fluororesin B1 preferably has a melting point of 100°C to 360°C. The melting point is more preferably 140°C or higher, still more preferably 160°C or higher, while more preferably 355°C or lower, still more preferably 350°C or lower.

The fluororesin B1 preferably has at least one melting point within a temperature range from 333°C to 360°C. The temperature range is more preferably 334°C or higher, still more preferably 335°C or higher, while more preferably 355°C or lower, still more preferably 350°C or lower.

The presence of a melting point within the above range indicates that the fluororesin B1 (preferably a non-melt-flowable fluororesin, more preferably PTFE) has no history of being heated to the melting point or higher.

In addition to the above melting point, the fluororesin C may also have a melting point within a temperature range lower than 333°C.

Examples of the fluororesin B1 include PTFE, PFA, FEP, ETFE, EFEP, PCTFE, a CTFE/TFE copolymer, a CTFE/TFE/PAVE copolymer, an Et/CTFE copolymer, PVF, PVdF, a VdF/TFE copolymer, a VdF/HFP copolymer, a VdF/TFE/HFP copolymer, a VdF/HFP/(meth)acrylic acid copolymer, a VdF/CTFE copolymer, a VdF/pentafluoropropylene copolymer, a VdF/PAVE/TFE copolymer, and low molecular weight PTFE.

The PTFE as a fluororesin B1 is non-melt-flowable. The PTFE may be a high molecular weight PTFE.

Preferably, the PTFE (high molecular weight PTFE) as a fluororesin B1 has at least one endothermic peak within a temperature range from 333°C to 347°C on a heat-of-fusion curve at a temperature-increasing rate of 10°C/min using a differential scanning calorimeter (DSC) and has an enthalpy of fusion of 62 mJ/mg or higher at 290°C to 350°C calculated from the heat-of-fusion curve.

The PTFE as a fluororesin B1 preferably has a standard specific gravity (SSG) of 2.130 to 2.280. The standard specific gravity is determined by the immersion method in conformity with ASTM D792 using a sample molded in conformity with ASTM D4895-89.

For the PTFE having no history of being heated to the melting point thereof or higher, the term "high molecular weight" means that the standard specific gravity falls within the above range.

The PTFE as a fluororesin B1 commonly has non-melt secondary processibility. The term "non-melt secondary processibility" is defined as described above.

The PTFE as a fluororesin B1 may be a homopolymer of TFE or may be a modified PTFE containing 99.0% by mass or more of a polymerized unit based on TFE and 1.0% by mass or less of a polymerized unit based on a modifying monomer (modifying monomer unit). The modified PTFE may consist only of a polymerized unit based on TFE and a modifying monomer unit.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

Examples of the modifying monomer usable in the PTFE as a fluororesin B1 include those described as examples for the PTFE (high molecular weight PTFE) as a fluororesin A1.

The low molecular weight PTFE as a fluororesin B1 is melt-flowable. The low molecular weight PTFE has a melt viscosity (complex viscosity) at 380°C of 1.0 × 10¹ to 1.0 × 10⁷ Pa·s.

The melt viscosity is preferably 1.0 × 10² or higher, more preferably 1.5 × 10³ Pa·s or higher, still more preferably 7.0 × 10³ Pa·s or higher, while preferably 7.0 × 10⁵ or lower, more preferably 3.0 × 10⁵ Pa·s or lower, still more preferably 1.0 × 10⁵ Pa·s or lower.

The "low molecular weight PTFE" herein means PTFE having a melt viscosity within the above range.

The melt viscosity is a value determined by heating a 2-g sample at 380°C for five minutes in advance and then keeping the sample at this temperature under a load of 0.7 MPa using a flow tester (available from Shimadzu Corp.) and a 2ϕ-8 L die in conformity with ASTM D1238.

The low molecular weight PTFE as a fluororesin B1 preferably has a melting point of 320°C to 340°C. The melting point is more preferably 324°C or higher, while more preferably 336°C or lower, still more preferably 333°C or lower, further preferably 332°C or lower, even more preferably 331°C or lower, particularly preferably 330°C or lower.

The low molecular weight PTFE as a fluororesin B1 may be a homopolymer of TFE or may be a modified PTFE containing 99.0% by mass or more of a polymerized unit based on TFE and 1.0% by mass or less of a polymerized unit based on a modifying monomer (modifying monomer unit). The modified PTFE may consist only of a polymerized unit based on TFE and a modifying monomer unit.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

Examples of the modifying monomer to be used in the low molecular weight PTFE as a fluororesin B1 include the monomers described above for the PTFE (high molecular weight PTFE) as a non-melt flowable fluororesin.

The fluororesin B1 may be a non-melt-flowable fluororesin or may be a melt-flowable fluororesin.

The non-melt-flowable fluororesin is preferably the aforementioned PTFE (high molecular weight PTFE).

The melt-flowable fluororesin preferably includes at least one selected from the group consisting of PFA, FEP, ETFE, EFEP, PCTFE, a CTFE/TFE copolymer, a CTFE/TFE/PAVE copolymer, an Et/CTFE copolymer, PVF, PVdF, a VdF/TFE copolymer, a VdF/HFP copolymer, a VdF/TFE/HFP copolymer, a VdF/HFP/(meth)acrylic acid copolymer, a VdF/CTFE copolymer, a VdF/pentafluoropropylene copolymer, a VdF/PAVE/TFE copolymer, and low molecular weight PTFE. More preferred is at least one selected from the group consisting of PFA, FEP, and low molecular weight ETFE, still more preferred is at least one selected from the group consisting of PFA and FEP.

The melt-flowable fluororesins other than the low molecular weight PTFE are the same as the melt-flowable fluororesins mentioned as examples for the fluororesin A1.

The particles of the fluororesin B1 preferably have an average primary particle size of 1 um or smaller. The average primary particle size is more preferably 500 nm or smaller, still more preferably 450 nm or smaller, further preferably 400 nm or smaller, further more preferably 350 nm or smaller, particularly preferably 300 nm or smaller. The average primary particle size is preferably 10 nm or greater, more preferably 25 nm or greater, still more preferably 50 nm or greater, further preferably 100 nm or greater, particularly preferably 150 nm or greater.

The average primary particle size is determined as follows. Specifically, an aqueous dispersion adjusted to have a solid concentration of 0.5% by mass is dropped onto aluminum foil and dried at 150°C for one hour so that water is removed. The residue is then observed using a scanning electron microscope (SEM) and 100 or more particles are randomly selected. The average of the diameters of these particles is defined as the average primary particle size.

In an embodiment of the first production method, the particles of the fluororesin B1 preferably have an average aspect ratio of 2.0 or lower, more preferably 1.7 or lower, still more preferably 1.6 or lower, further preferably 1.5 or lower, even more preferably 1.4 or lower, particularly preferably 1.3 or lower. The average aspect ratio may be 1.0 or higher.

The average aspect ratio is determined as follows. Specifically, an aqueous dispersion of the fluororesin diluted to have a solid concentration of 0.5% by mass is observed using a scanning electron microscope (SEM) and 100 or more particles randomly selected are imaged. The ratio of the major and minor axes of each particle is then obtained and the average thereof is defined as the average aspect ratio.

In an embodiment of the first production method, the particles of the fluororesin B1 having an aspect ratio of 2.5 or higher are preferably in a proportion of 0.5% or more, more preferably 1.0% or more, still more preferably 1.5% or more, particularly preferably 2.0% or more of all particles of the fluororesin B1. The proportion is also preferably 20% or less, more preferably 15% or less, still more preferably 10% or less.

The above proportion is determined as follows. Specifically, an aqueous dispersion of the fluororesin diluted to have a solid concentration of 0.5% by mass is observed using a scanning electron microscope (SEM) and 100 or more particles randomly selected are imaged. The aspect ratio of each particle is then calculated and the proportion of the particles of interest is defined relative to the total number of the particles selected.

The particles of the fluororesin B1 are preferably contained in an amount of 50% by mass or more, more preferably 60% by mass or more, still more preferably 80% by mass or more, further preferably 90% by mass or more, particularly preferably 95% by mass or more, most preferably 98% by mass or more of the solid content of the aqueous dispersion.

The aqueous dispersion in the first production method commonly contains an aqueous medium. The aqueous dispersion may be one in which the particles of the fluororesin B1 are dispersed in an aqueous medium.

The aqueous medium means a liquid containing water. The aqueous medium may be any one containing water, and may be one containing water as well as, for example, a fluorine-free organic solvent such as alcohol, ether, and ketone and/or a fluorine-containing organic solvent having a boiling point of 40°C or lower. The aqueous medium preferably contains 90% by mass or more, more preferably 95% by mass or more of water.

The aqueous dispersion has a solid concentration of 70% by mass or lower. In order to produce a fluororesin composition suffering much less coloring and having much better tensile properties, the solid concentration is preferably 50% by mass or lower, more preferably 45% by mass or lower, still more preferably 40% by mass or lower, further preferably 35% by mass or lower. The solid concentration is also preferably 1% by mass or higher, more preferably 5% by mass or higher, still more preferably 10% by mass or higher.

The solid concentration is calculated as follows. Specifically, about 1 g (X g) of the aqueous dispersion is put into a 5-cm-diameter aluminum cup and heated at 110°C for 30 minutes, so that a heating residue (Y g) is obtained. The resulting heating residue (Y g) is further heated at 300°C for 30 minutes, so that a heating residue (Z g) is obtained. The solid concentration is determined by the formula: P = (Z/X) × 100 (% by mass).

The aqueous dispersion may contain a hydrocarbon surfactant. The hydrocarbon surfactant is preferably free from a fluorine atom.

The hydrocarbon surfactant to be used may be any of those described in JP 2013-542308 T, JP 2013-542309 T, or JP 2013-542310 T, for example.

The hydrocarbon surfactant has a hydrophilic portion and a hydrophobic portion on the same molecule. These hydrocarbon surfactants may be cationic, nonionic, or anionic.

Common cationic surfactants have a positively charged hydrophilic portion such as an alkylated ammonium halide, e.g., alkylated ammonium bromide, and a hydrophobic portion such as a long-chain fatty acid.

Common anion surfactants have a hydrophilic portion such as a carboxylic acid salt, a sulfonic acid salt, or a sulfuric acid salt, and a hydrophobic portion such as a long-chain hydrocarbon portion, e.g., an alkyl.

Common nonionic surfactants are free from a charged group and have a hydrophilic portion which is a long-chain hydrocarbon. The hydrophilic portion of a nonionic surfactant contains a water-soluble functional group such as the chain of ethylene ether induced by polymerization with ethylene oxide.

The hydrocarbon surfactant is preferably an anion surfactant or a nonionic surfactant.

Examples of the anionic hydrocarbon surfactant include Versatic^{®} 10 available from Resolution Performance Products, LLC and Avanel S series (e.g., S-70, S-74) available from BASF.

The anionic hydrocarbon surfactant may also be an anion surfactant represented by R-L-M¹ wherein R is a C1 or higher linear or branched alkyl group optionally containing a substituent or a C3 or higher cyclic alkyl group optionally containing a substituent, where the group optionally contains a monovalent or divalent heterocycle or optionally forms a ring in the case where it is a C3 or higher alkyl group; L is -ArSO₃⁻, -SO₃⁻, -SO₄⁻, -PO₃⁻, or - COO⁻; M¹ is H, a metal atom, NR⁵₄ (where R⁵s are the same as or different from each other and are each H or a C1-C10 organic group), imidazolium optionally having a substituent, pyridinium optionally having a substituent, or phosphonium optionally having a substituent, with -ArSO₃⁻being an aryl sulfonic acid salt.

Specific examples thereof include those represented by CH₃- (CH₂)ₙ-L-M¹ wherein n is an integer of 6 to 17; and L and M¹ are defined as described above.

Also usable is a mixture of those in which R is a C12-C16 alkyl group and L is a sulfuric acid salt or sodium dodecyl sulfate (SDS).

The anionic hydrocarbon surfactant may also be an anion surfactant represented by R⁶(-L-M¹)₂ wherein R⁶ is a C1 or higher linear or branched alkylene group optionally containing a substituent or a C3 or higher cyclic alkylene group optionally containing a substituent, where the group optionally contains a monovalent or divalent heterocycle or optionally forms a ring in the case where it is a C3 or higher alkyl group; L is -ArSO₃⁻, -SO₃⁻, -SO₄⁻, -PO₃⁻, or - COO⁻; M¹ is H, a metal atom, NR⁵₄ (where R⁵s are the same as or different from each other and are each H or a C1-C10 organic group), imidazolium optionally having a substituent, pyridinium optionally having a substituent, or phosphonium optionally having a substituent, with -ArSO₃⁻being an aryl sulfonic acid salt.

The anionic hydrocarbon surfactant may also be an anion surfactant represented by R⁷(-L-M¹)₃ wherein R⁷ is a C1 or higher linear or branched alkylidyne group optionally containing a substituent or a C3 or higher cyclic alkylidyne group optionally containing a substituent, where the group optionally contains a monovalent or divalent heterocycle or optionally forms a ring in the case where it is a C3 or higher alkyl group; L is -ArSO₃⁻, -SO₃⁻, -SO₄⁻, - PO₃⁻, or -COO⁻; M¹ is H, a metal atom, NR⁵₄ (where R⁵s are the same as or different from each other and are each H or a C1-C10 organic group), imidazolium optionally having a substituent, pyridinium optionally having a substituent, or phosphonium optionally having a substituent, with -ArSO₃⁻being an aryl sulfonic acid salt.

An example of the anionic hydrocarbon surfactant is a sulfosuccinate surfactant Lankropol^{®} K8300 available from Akzo Nobel Surface Chemistry LLC.

Examples of sulfosuccinate hydrocarbon surfactants include sodium diisodecyl sulfosuccinate (Emulsogen^{®} SB10, available from Clariant) and sodium diisotridecyl sulfosuccinate (Polirol^{®} TR/LNA, available from Cesapinia Chemicals).

Examples of the anionic hydrocarbon surfactant also include PolyFox^{®} surfactants (e.g., PolyFox^{™} PF-156A and PolyFox^{™} PF-136A) available from Omnova Solutions, Inc.

Examples of the nonionic surfactant include ether nonionic surfactants such as a polyoxyethylene alkyl ether, a polyoxyethylene alkyl phenyl ether, and a polyoxyethylene alkylene alkyl ether; polyoxyethylene derivatives such as an ethylene oxide/propylene oxide block copolymer; ester nonionic surfactants such as a polyoxyethylene fatty acid ester (polyoxyethylene alkyl ester), a sorbitan fatty acid ester (sorbitan alkyl ester), a polyoxyethylene sorbitan fatty acid ester (polyoxyethylene sorbitan alkyl ester), a polyoxyethylene sorbitol fatty acid ester, and a glycerin fatty acid ester (glycerol ester); amine nonionic surfactants such as a polyoxyethylene alkyl amine and an alkyl alkanol amide; and derivatives thereof. One of these may be used alone, or two or more of these may be used in combination.

The nonionic surfactant may be a non-fluorinated nonionic surfactant.

Examples of the polyoxyethylene alkyl ether include polyoxyethylene lauryl ether, polyoxyethylene cetyl ether, polyoxyethylene stearyl ether, polyoxyethylene oleyl ether, and polyoxyethylene behenyl ether.

Examples of the polyoxyethylene alkyl phenyl ether include polyoxyethylene nonyl phenyl ether and polyoxyethylene octyl phenyl ether.

Specific examples of the polyoxyethylene fatty acid ester include polyethylene glycol monolaurate, polyethylene glycol monooleate, and polyethylene glycol monostearate.

Examples of the sorbitan fatty acid ester include sorbitan monolaurate, sorbitan monopalmitate, sorbitan monostearate, and sorbitan monooleate.

Examples of the polyoxyethylene sorbitan fatty acid ester include polyoxyethylene sorbitan monolaurate, polyoxyethylene sorbitan monopalmitate, and polyoxyethylene sorbitan monostearate.

Examples of the glycerin fatty acid ester include glycerol monomyristate, glycerol monostearate, and glycerol monooleate.

Examples of the derivatives include a polyoxyethylene alkyl amine, a polyoxyethylene alkyl phenyl-formaldehyde condensate, and a polyoxyethylene alkyl ether phosphate.

The ether nonionic surfactant and the ester nonionic surfactant may have a HLB value of 10 to 18.

Examples of the nonionic hydrocarbon surfactant include Triton^{®} X series (e.g., X15, X45, X100), Tergitol^{®} 15-S series, Tergitol^{®} TMN series (e.g., TMN-6, TMN-10, TMN-100), and Tergitol^{®} L series available from Dow Chemical Company, Pluronic^{®} R series (31R1, 17R2, 10R5, 25R4 (m: ~22, n: ~23)), T-Det series (A138), and Iconol^{®} TDA series (TDA-6, TDA-9, TDA-10) available from BASF.

In the compound of the nonionic surfactant, the hydrophobic group thereof may be any of an alkyl phenol group, a linear alkyl group, and a branched alkyl group. Still, the compound is preferably one containing no benzene ring, such as a compound having no alkyl phenol group in the structure.

In particular, the nonionic surfactant is preferably one containing an ether bond (-O-), more preferably the aforementioned ether nonionic surfactant, still more preferably a polyoxyethylene alkyl ether. The polyoxyethylene alkyl ether is preferably one including a polyoxyethylene alkyl ether structure containing a C10-C20 alkyl group, more preferably one including a polyoxyethylene alkyl ether structure containing a C10-C15 alkyl group. The alkyl group in the polyoxyethylene alkyl ether structure preferably has a branched structure.

In order to produce a fluororesin composition having much less coloring and much better tensile properties, the hydrocarbon surfactant is preferably contained in an amount of 12% by mass or less, more preferably 8% by mass or less, still more preferably 6% by mass or less, further preferably 4% by mass or less, even more preferably 2% by mass or less, particularly preferably 1% by mass or less of the solid content of the aqueous dispersion. The amount of the hydrocarbon surfactant may also be 1 ppm by mass or more, 10 ppm by mass or more, 100 ppm by mass or more, or 500 ppm by mass or more.

In order to produce a fluororesin composition having much less coloring and much better tensile properties, the nonionic surfactant is preferably contained in an amount of 12% by mass or less, more preferably 8% by mass or less, still more preferably 6% by mass or less, further preferably 4% by mass or less, even more preferably 2% by mass or less, particularly preferably 1% by mass or less of the solid content of the aqueous dispersion. The amount of the nonionic surfactant may also be 1 ppm by mass or more, 10 ppm by mass or more, 100 ppm by mass or more, or 500 ppm by mass or more.

The aqueous dispersion also preferably contains no nonionic surfactant and also preferably contains no hydrocarbon surfactant.

In order to produce a fluororesin composition suffering less coloring and having more better tensile properties, the aqueous dispersion preferably contains a low molecular weight fluorine-containing compound in an amount (total amount) of 1 ppm by mass or less, more preferably 500 ppb by mass or less, still more preferably 100 ppb by mass or less, further preferably 50 ppb by mass or less, even more preferably 25 ppb by mass or less, particularly preferably 10 ppb by mass or less, more particularly preferably 5 ppb by mass or less, still more particularly preferably 1 ppb by mass or less, most preferably less than 1 ppb by mass of the aqueous dispersion.

The amount of the low molecular weight fluorine-containing compound is determined using a liquid chromatograph-mass spectrometer (LC/MS/MS) on a Soxhlet extract of a sample with methanol.

Examples of the low molecular weight fluorine-containing compound include C4 or higher fluorine-containing carboxylic acids and salts thereof and C4 or higher fluorine-containing sulfonic acid and salts thereof. Each of these may contain an ether bond (-O-).

The low molecular weight fluorine-containing compound may be, for example, a fluorine-containing anion surfactant. For example, the fluorine-containing anion surfactant may be a surfactant which contains a fluorine atom and in which the portions excluding the anionic group have a total carbon number of 20 or less.

The fluorine-containing surfactant may also be a surfactant which contains fluorine and in which the anionic portion has a molecular weight of 800 or lower.

The "anionic portion" means a portion of the fluorine-containing surfactant excluding the cation. For example, in the case of F(CF₂)ₙ₁COOM represented by the formula (I) to be described later, the portion "F(CF₂)ₙ₁COO" corresponds to the anionic portion.

The low molecular weight fluorine-containing compound may also be a fluorine-containing surfactant having a LogPOW of 3.5 or lower. The LogPOW is a partition coefficient of 1-octanol and water, and is represented by LogP wherein P is the ratio (concentration of fluorine-containing surfactant in octanol)/(concentration of fluorine-containing surfactant in water) after phase separation of an octanol/water (1:1) liquid mixture containing the fluorine-containing surfactant.

The LogPOW is calculated as follows. Specifically, HPLC is performed on standard substances (heptanoic acid, octanoic acid, nonanoic acid, and decanoic acid) having known octanol/water partition coefficients under the following conditions, i.e., column: TOSOH ODS-120T column (ϕ4.6 mm × 250 mm, available from Tosoh corp.); eluent: acetonitrile/0.6% by mass HClO₄ in water = 1/1 (vol/vol%); flow rate: 1.0 mL/min; amount of sample: 300 µL, column temperature: 40°C, and detection light: UV 210 nm. A calibration curve is then drawn using the respective elution times and known octanol/water partition coefficients. Based on this calibration curve, the LogPOW is calculated from the elution time of a sample liquid in HPLC.

Specific examples of the fluorine-containing surfactant include those disclosed in US 2007/0015864 A1, US 2007/0015865 A1, US 2007/0015866 A1, US 2007/0276103 A1, US 2007/0117914 A1, US 2007/142541 A1, US 2008/0015319 A1, US 3250808 A, US 3271341 A, JP 2003-119204 A, WO 2005/042593 A1, WO 2008/060461 A1, WO 2007/046377 A1, JP 2007-119526 A, WO 2007/046482 A1, WO 2007/046345 A1, US 2014/0228531 A1, WO 2013/189824 A1, and WO 2013/189826 A1.

Examples of the fluorine-containing anion surfactant include compounds represented by the following formula (N⁰):

Xⁿ⁰-Rfⁿ⁰-Y⁰ (N⁰)

wherein Xⁿ⁰ is H, Cl, or/and F; Rfⁿ⁰ is a C3-C20 linear, branched, or cyclic alkylene group in which any or all of H atoms are replaced by F atoms, where the alkylene group optionally contains at least one ether bond and any H is optionally replaced by Cl; and Y° is an anionic group.

The anionic group for Y⁰ may be -COOM, -SO₂M, or - SO₃M, and may be -COOM or -SO₃M.

M is H, a metal atom, NR⁷₄, imidazolium optionally having a substituent, pyridinium optionally having a substituent, or phosphonium optionally having a substituent, where R⁷ is H or an organic group.

Examples of the metal atom include alkali metals (Group 1) and alkaline earth metals (Group 2), such as Na, K, and Li.

R⁷ may be H or a C1-C10 organic group, or may be H or a C1-C4 organic group, or may be H or a C1-C4 alkyl group.

M may be H, a metal atom, or NR⁷₄, or may be H, an alkali metal (Group 1), an alkaline earth metal (Group 2), or NR⁷₄, or may be H, Na, K, Li, or NH₄.

Rfⁿ⁰ may be a group in which 50% or more of H atoms are replaced by fluorine atoms.

Examples of the compounds represented by the formula (N⁰) include
compounds represented by the following formula (N¹) :

   Xⁿ⁰-(CF₂)ₘ₁-Y⁰ (N¹)

   wherein Xⁿ⁰ is H, Cl, or F; m1 is an integer of 3 to 15; and Y° is defined as described above;
compounds represented by the following formula (N²):

   Rfⁿ¹-O-(CF(CF₃)CF₂O)ₘ₂CFXⁿ¹-Y⁰ (N²)

   wherein Rfⁿ¹ is a C1-C5 perfluoroalkyl group; m2 is an integer of 0 to 3; Xⁿ¹ is F or CF₃; and Y⁰ is defined as described above;
compounds represented by the following formula (N³):

   Rfⁿ²(CH₂) ₘ₃-(Rfⁿ³)_{q}-Y⁰ (N³)

   wherein Rfⁿ² is a C1-C13 partially or completely fluorinated alkyl group optionally containing an ether bond and/or a chlorine atom; m3 is an integer of 1 to 3; Rfⁿ³ is a C1-C3 linear or branched perfluoroalkylene group; q is 0 or 1; and Y⁰ is defined as described above;
compounds represented by the following formula (N⁴):

   Rfⁿ⁴-O-(CYⁿ¹Yⁿ²)ₚCF₂-Y⁰ (N⁴)

   wherein Rfⁿ⁴ is a C1-C12 linear or branched, partially or completely fluorinated alkyl group optionally containing an ether bond; Yⁿ¹ and Yⁿ² are the same as or different from each other and are each H or F; p is 0 or 1; and Y⁰ is defined as described above; and
compounds represented by the following formula (N⁵): 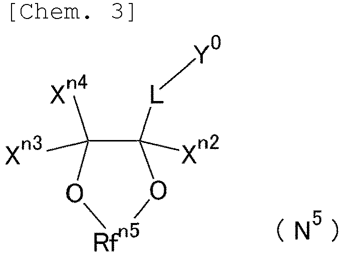 wherein Xⁿ², Xⁿ³, and Xⁿ⁴ are the same as or different from each other and are each H, F, or a C1-C6 linear or branched, partially or completely fluorinated alkyl group optionally containing an ether bond; Rfⁿ⁵ is a C1-C3 linear or branched, partially or completely fluorinated alkylene group optionally containing an ether bond; L is a linking group; and Y° is defined as described above, where the total carbon number of Xⁿ², Xⁿ³, Xⁿ⁴, and Rfⁿ⁵ is 18 or less.

Specific examples of the compound represented by the formula (N⁰) include a perfluorocarboxylic acid (I) represented by the following formula (I), an ω-H perfluorocarboxylic acid (II) represented by the following formula (II), a perfluoroether carboxylic acid (III) represented by the following formula (III), a perfluoroalkyl alkylene carboxylic acid (IV) represented by the following formula (IV), an alkoxyfluorocarboxylic acid (V) represented by the following formula (V), a perfluoroalkyl sulfonic acid (VI) represented by the following formula (VI), an ω-H perfluorosulfonic acid (VII) represented by the following formula (VII), a perfluoroalkyl alkylene sulfonic acid (VIII) represented by the following formula (VIII), an alkyl alkylene carboxylic acid (IX) represented by the following formula (IX), a fluorocarboxylic acid (X) represented by the following formula (X), an alkoxyfluorosulfonic acid (XI) represented by the following formula (XI), a compound (XII) represented by the following formula (XII), and a compound (XIII) represented by the following formula (XIII).

The perfluorocarboxylic acid (I) is represented by the following formula (I):

F(CF₂)ₙ₁COOM (I)

wherein n1 is an integer of 3 to 14; M is H, a metal atom, NR⁷₄, imidazolium optionally having a substituent, pyridinium optionally having a substituent, or phosphonium optionally having a substituent, where R⁷ is H or an organic group.

The ω-H perfluorocarboxylic acid (II) is represented by the following formula (II):

H(CF₂)ₙ₂COOM (II)

wherein n2 is an integer of 4 to 15; and M is defined as described above.

The perfluoroether carboxylic acid (III) is represented by the following formula (III):

Rf¹-O-(CF(CF₃)CF₂O)ₙ₃CF(CF₃)COOM (III)

wherein Rf¹ is a C1-C5 perfluoroalkyl group; n3 is an integer of 0 to 3; and M is defined as described above.

The perfluoroalkyl alkylene carboxylic acid (IV) is represented by the following formula (IV):

Rf²(CH₂)ₙ₄Rf³COOM (IV)

wherein Rf² is a C1-C5 perfluoroalkyl group; Rf³ is a C1-C3 linear or branched perfluoroalkylene group; n4 is an integer of 1 to 3; and M is defined as described above.

The alkoxyfluorocarboxylic acid (V) is represented by the following formula (V):

Rf⁴-O-CY¹Y²CF₂-COOM (V)

wherein Rf⁴ is a C1-C12 linear or branched, partially or completely fluorinated alkyl group optionally containing an ether bond and/or a chlorine atom; Y¹ and Y² are the same as or different from each other and are each H or F; and M is defined as described above.

The perfluoroalkylsulfonic acid (VI) is represented by the following formula (VI):

F(CF₂)ₙ₅SO₃M (VI)

wherein n5 is an integer of 3 to 14; and M is defined as described above.

The ω-H perfluorosulfonic acid (VII) is represented by the following formula (VII):

H(CF₂)ₙ₆SO₃M (VII)

wherein n6 is an integer of 4 to 14; and M is defined as described above.

The perfluoroalkyl alkylene sulfonic acid (VIII) is represented by the following formula (VIII):

Rf⁵(CH₂)ₙ₇SO₃M (VIII)

wherein Rf⁵ is a C1-C13 perfluoroalkyl group; n7 is an integer of 1 to 3; and M is defined as described above.

The alkyl alkylene carboxylic acid (IX) is represented by the following formula (IX):

Rf⁶(CH₂)ₙ₈COOM (IX)

wherein Rf⁶ is a C1-C13 linear or branched, partially or completely fluorinated alkyl group optionally containing an ether bond; n8 is an integer of 1 to 3; and M is defined as described above.

The fluorocarboxylic acid (X) is represented by the following formula (X):

Rf⁷-O-Rf⁸-O-CF₂-COOM (X)

wherein Rf⁷ is a C1-C6 linear or branched, partially or completely fluorinated alkyl group optionally containing an ether bond and/or a chlorine atom; Rf⁸ is a C1-C6 linear or branched, partially or completely fluorinated alkyl group; and M is defined as described above.

The alkoxyfluorosulfonic acid (XI) is represented by the following formula (XI):

Rf⁹-O-CY¹Y²CF₂-SO₃M (XI)

wherein Rf⁹ is a C1-C12 linear or branched, partially or completely fluorinated alkyl group optionally containing an ether bond and optionally containing a chlorine atom; Y¹ and Y² are the same as or different from each other and are each H or F; and M is defined as described above.

The compound (XII) is represented by the following formula (XII): 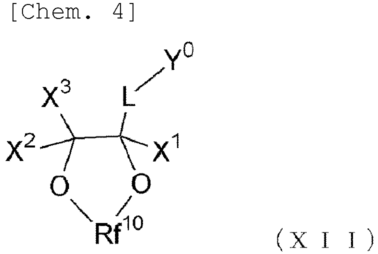 wherein X¹, X², and X³ are the same as or different from each other and are each H, F, or a C1-C6 linear or branched, partially or completely fluorinated alkyl group optionally containing an ether bond; Rf¹⁰ is a C1-C3 perfluoroalkylene group; L is a linking group; and Y° is an anionic group.

Y⁰ may be -COOM, -SO₂M, or -SO₃M, or may be -SO₃M or COOM, wherein M is defined as described above.

L may be a single bond or a C1-C10 partially or completely fluorinated alkylene group optionally containing an ether bond, for example.

The compound (XIII) is represented by the following formula (XIII):

Rf¹¹-O-(CF₂CF(CF₃)O)ₙ₉(CF₂O)ₙ₁₀CF₂COOM (XIII)

wherein Rf¹¹ is a C1-C5 fluoroalkyl group containing chlorine; n9 is an integer of 0 to 3; n10 is an integer of 0 to 3; and M is defined as described above. The compound (XIII) may be CF₂ClO(CF₂CF(CF₃)O)ₙ₉(CF₂O)ₙ₁₀CF₂COONH₄, which is a mixture having an average molecular weight of 750, wherein n9 and n10 are defined as described above.

As described above, examples of the fluorine-containing anion surfactant include carboxylic acid surfactants and sulfonic acid surfactants.

The fluorine-containing surfactant may be a single fluorine-containing surfactant or may be a mixture of two or more fluorine-containing surfactants.

Examples of the fluorine-containing surfactant include compounds represented by any of the following formulas. The fluorine-containing surfactant may be a mixture of any of these compounds:
F(CF₂) ₇COOM,
F(CF₂) ₅COOM,
H(CF₂) ₆COOM,
H(CF₂) ₇COOM,
CF₃O(CF₂)₃OCHFCF₂COOM,
C₃F₇OCF(CF₃)CF₂OCF(CF₃)COOM,
CF₃CF₂CF₂OCF(CF₃)COOM,
CF₃CF₂OCF₂CF₂OCF₂COOM,
C₂F₅OCF(CF₃)CF₂OCF(CF₃)COOM,
CF₃OCF(CF₃)CF₂OCF(CF₃)COOM,
CF₂ClCF₂CF₂OCF(CF₃)CF₂OCF₂COOM,
CF₂ClCF₂CF₂OCF₂CF(CF₃)OCF₂COOM,
CF₂ClCF(CF₃)OCF(CF₃)CF₂OCF₂COOM,
CF₂ClCF(CF₃)OCF₂CF(CF₃)OCF₂COOM, and

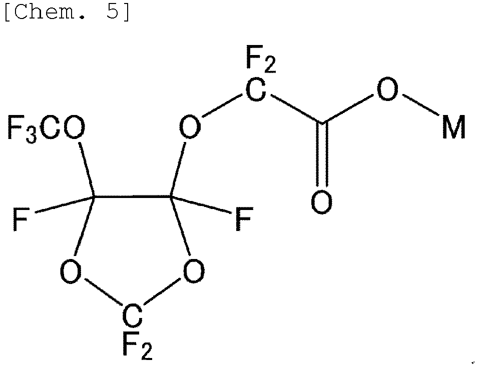

In the formulas, M is H, a metal atom, NR⁷₄, imidazolium optionally having a substituent, pyridinium optionally having a substituent, or phosphonium optionally having a substituent; where R⁷ is defined as described above.

The aqueous dispersion may be produced by emulsion polymerization of monomers to form a fluororesin B1 in an aqueous medium in the presence of an anion surfactant and a polymerization initiator. The emulsion polymerization may be accompanied by appropriate use of additives such as a chain transfer agent, a buffer, a pH adjuster, a stabilization aid, and a dispersion stabilizer.

A person skilled in the art would control the composition and physical properties of the fluororesin B1 as well as the physical properties of the particles by adjusting the conditions for emulsion polymerization.

The aqueous dispersion obtained by emulsion polymerization may be combined with a hydrocarbon surfactant. Examples of the hydrocarbon surfactant include those described above.

The aqueous dispersion obtained by emulsion polymerization or the aqueous dispersion combined with a hydrocarbon surfactant may be brought into contact with an anion exchange resin or a mixed bed containing an anion exchange resin and a cation exchange resin, or may be condensed, or may be treated by both of these treatments. This treatment can remove a low molecular weight fluorine-containing compound. The treatment to be used may be a known treatment.

The anion exchange resin and the mixed bed may be, but are not limited to, known ones. A known method may be used for contact with the anion exchange resin or the mixed bed.

The condensation may be performed by a known method, such as phase separation, centrifugal sedimentation, cloud point concentration, electro-concentration, electrophoresis, filtration by ultrafiltration, filtration with reverse osmosis membrane (RO membrane), or nanofiltration.

An aqueous dispersion immediately after polymerization obtained by the emulsion polymerization (before mixed with a hydrocarbon surfactant) may be fed to the mixing, or an aqueous dispersion mixed with the hydrocarbon surfactant may be fed to the mixing, or an aqueous dispersion obtained by contact or concentration with the ion exchange resin may be fed to the mixing. If the solid concentration is higher than 50% by mass, the aqueous dispersion is to be diluted before use.

In order to produce a fluororesin composition suffering much less coloring and having much better tensile properties, the aqueous dispersion preferably has a viscosity at 25°C of 100 mPa·s or lower, more preferably 50 mPa·s or lower, still more preferably 40 mPa·s or lower, particularly preferably 30 mPa·s or lower. The viscosity may be 0.1 mPa·s or higher.

The viscosity is measured at 25°C using a B-type rotational viscometer (available from Toki Sangyo Co., Ltd., rotor No.2) at a rotational frequency of 60 rpm for a measurement time of 120 seconds.

In order to produce a fluororesin composition suffering much less coloring and having much better tensile properties, the powder of the fluororesin A1 and the aqueous dispersion were preferably mixed such that the mass ratio of the powder of the fluororesin A1 to the particles of the fluororesin B1 (A1/B1) is 1/99 to 90/10.

The mass ratio A1/B1 is more preferably 3/97 or higher, still more preferably 5/95 or higher, further preferably 10/90 or higher, particularly preferably 15/85 or higher. The mass ratio A1/B1 is also more preferably 85/15 or lower, still more preferably 80/20 or lower, further preferably 75/25 or lower, particularly preferably 70/30 or lower.

If the mixture obtained by the mixing has too high a solid concentration or viscosity, the mixture may be diluted so that the solid concentration or the viscosity is controlled to fall within the aforementioned range.

The first production method may include a coagulating step of coagulating the mixture obtained in the mixing step. This coagulation may be performed by a method of coagulating emulsified particles by freezing or mechanical shearing force. Stirring may be performed while a coagulating agent is added, such as a water-soluble organic compound, e.g., methanol or acetone, an inorganic salt, e.g., potassium nitrate or ammonium carbonate, or an inorganic acid such as hydrochloric acid, sulfuric acid, or nitric acid. The coagulation may be continuously performed using, for example, an inline mixer.

In the drying step, the mixture obtained in the mixing step is dried, whereby a fluororesin composition is obtained. In the case where the first production method includes the coagulating step, a wet powder obtained by the coagulation is dried.

The drying may be performed by any method, and may be performed by a known method using, for example, vacuum, high frequency waves, or hot air.

The drying temperature is preferably 50°C or higher, more preferably 70°C or higher, still more preferably 100°C or higher, particularly preferably 150°C or higher, while preferably 300°C or lower, more preferably 250°C or lower.

The first production method may include a pulverization step of pulverizing the fluororesin composition obtained in the drying step. The pulverization may be performed by any known method, such as use of an air jet mill, a hammer mill, a force mill, a millstone pulverizer, or a freeze pulverizer.

The disclosure also provides a method for producing a fluororesin composition (hereinafter, also referred to as a second production method), the method including: mixing a powder of a fluororesin A1 having a history of being heated to the melting point thereof or higher and an aqueous dispersion containing particles of a fluororesin B1 and containing no hydrocarbon surfactant to provide a mixture (mixing step); and drying the mixture to provide a fluororesin composition (drying step).

In the second production method, an aqueous dispersion used contains no hydrocarbon surfactant and thus can reduce coloring or an influence on the physical properties due to remaining of a hydrocarbon surfactant. This results in production of a fluororesin composition suffering less coloring and having excellent tensile properties while containing a fluororesin having a history of being heated to the melting point thereof or higher.

The powder of the fluororesin A1 and the particles of the fluororesin B1 are as described for the first production method.

The aqueous dispersion in the second production method contains no hydrocarbon surfactant. Examples of the hydrocarbon surfactant include those mentioned as examples for the first production method.

The other components and physical properties of the aqueous dispersion may be the same as those described for the first production method.

Preferred embodiments of the mixing step in the second production method are the same as the embodiments described for the first production method.

The drying step in the second production method may be the same as the drying step in the first production method.

Other optional steps to be usable in the second production method and preferred embodiments are the same as those in the first production method.

The first and second production methods may further include mixing a filler.

The filler may be mixed with the powder of the fluororesin A1, or may be mixed with the aqueous dispersion, or may be mixed with the mixture obtained in the mixing of the powder of the fluororesin A1 and the aqueous dispersion, or may be mixed with the wet powder obtained in the coagulation, or may be mixed with the fluororesin composition obtained in the drying.

The filler may include, for example, at least one selected from the group consisting of glass fiber, glass beads, carbon fiber, spherical carbon, carbon black, graphite, silica, alumina, mica, silicon carbide, boron nitride, titanium oxide, bismuth oxide, cobalt oxide, molybdenum disulfide, bronze, gold, silver, copper, and nickel.

Preferred is at least one selected from the group consisting of glass fiber, carbon fiber, carbon black, and bronze.

The first and second production methods also preferably include granulating the fluororesin composition obtained in the drying. This can provide a fluororesin composition having a high apparent density and excellent handleability.

The granulation may be performed by any known method, such as underwater granulation, hot water granulation, emulsification-dispersion granulation, emulsification hot water granulation, solvent-free granulation, or dry solvent granulation.

The disclosure also provides a fluororesin composition obtainable by the first or second production method. The fluororesin composition suffers less coloring and has excellent tensile properties while containing a fluororesin having a history of being heated to the melting point thereof or higher.

The fluororesin composition obtainable by the first or second production method may be in any form, and is preferably in the form of powder.

In order to much reduce coloring and to much improve the tensile properties, the fluororesin composition obtainable by the first or second production method preferably contains a nonionic surfactant in an amount of 1.0% by mass or less, more preferably 0.9% by mass or less, still more preferably 0.8% by mass or less, further preferably 0.7% by mass or less, particularly preferably 0.6% by mass or less of the fluororesin composition. The lower limit thereof may be, but is not limited to, lower than the detection limit or may be 1000 ppm by mass.

The amount of the nonionic surfactant is determined as follows. Specifically, 1 g of the fluororesin composition freeze-pulverized is ultrasonically extracted in 10 mL of methanol at 60°C and the amount is determined in conformity with "Appended Table 28 of Method specified by the Minister of Health, Labour and Welfare based on the provisions of the Ministerial Order on water quality standards, Public Notice of the Ministry of Health, Labour and Welfare No. 261 of 2003".

The disclosure also provides a fluororesin composition containing: a fluororesin A2 having a history of being heated to the melting point thereof or higher; and a fluororesin B2 having no history of being heated to the melting point thereof or higher, the fluororesin composition containing microparticles having a primary particle size of 1 um or smaller.

The fluororesin composition of the disclosure contains a fluororesin having no history of being heated to the melting point thereof or higher and microparticles having a specific particle size and therefore suffers less coloring and has excellent tensile properties while containing a fluororesin having a history of being heated to the melting point thereof or higher.

The fluororesin composition of the disclosure preferably has at least one melting point within a temperature range lower than 333°C and at least one melting point within a temperature range not lower than 333°C.

The temperature range lower than 333°C is more preferably lower than 332°C, still more preferably lower than 331°C, while preferably 100°C or higher, more preferably 140°C or higher, still more preferably 160°C or higher.

The temperature range not lower than 333°C is more preferably 334°C or higher, still more preferably 335°C, while preferably 360°C or lower, more preferably 355°C or lower, still more preferably 350°C or lower.

The presence of the melting points in the two respective temperature ranges indicates that the fluororesin composition contains a fluororesin A2 having a history of being heated to the melting point thereof or higher (preferably a non-melt-flowable fluororesin, more preferably PTFE) and a fluororesin B2 having no history of being heated to the melting point thereof or higher (preferably a non-melt-flowable fluororesin, more preferably PTFE).

The fluororesin A2 has a history of being heated to the melting point thereof or higher. The heating may be heating for molding or heat treatment, for example.

The fluororesin A2 preferably has at least one melting point within a temperature range lower than 333°C. The temperature range lower than 333°C is more preferably lower than 332°C, still more preferably lower than 331°C, while preferably 100°C or higher, more preferably 140°C or higher, still more preferably 180°C or higher.

A melting point within the above range indicates that the resin has a history of being heated to the melting point thereof or higher.

The fluororesin A2 may also have a melting point within a temperature range of 333°C or higher.

The fluororesin A2 may be the same resin as the fluororesin A1 in the first production method.

The fluororesin A2 is preferably a non-melt-flowable fluororesin, more preferably PTFE (high molecular weight PTFE).

The fluororesin A2 may include a melt-flowable fluororesin. Examples of the melt-flowable fluororesin include PFA, FEP, ETFE, EFEP, PCTFE, a CTFE/TFE copolymer, a CTFE/TFE/PAVE copolymer, an Et/CTFE copolymer, PVF, PVdF, a VdF/TFE copolymer, a VdF/HFP copolymer, a VdF/TFE/HFP copolymer, a VdF/HFP/(meth)acrylic acid copolymer, a VdF/CTFE copolymer, a VdF/pentafluoropropylene copolymer, a VdF/PAVE/TFE copolymer, and low molecular weight PTFE. Preferred is at least one selected from the group consisting of PFA, FEP, and ETFE, more preferred is at least one selected from the group consisting of PFA and FEP.

The fluororesin composition of the disclosure may contain particles of the fluororesin A2. The particles of the fluororesin A2 may be secondary particles of the fluororesin A2.

The particles of the fluororesin A2 preferably have an average secondary particle size of 1 to 200 um. The average secondary particle size is more preferably 5 um or greater, still more preferably 10 um or greater, while more preferably 150 um or smaller, still more preferably 100 um or smaller, further preferably 70 um or smaller, particularly preferably 50 um or smaller, most preferably 30 um or smaller.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

The particles of the fluororesin A2 preferably have a D90 of 10 um or greater, more preferably 30 um or greater, still more preferably 50 um or greater, while preferably 600 um or smaller, more preferably 500 um or smaller, still more preferably 400 um or smaller.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

The fluororesin B2 has no history of being heated to the melting point thereof or higher.

The fluororesin B2 preferably has a melting point of 100°C to 360°C. The melting point is more preferably 140°C or higher, still more preferably 160°C or higher, while more preferably 355°C or lower, still more preferably 350°C or lower.

The fluororesin B2 preferably has at least one melting point within a temperature range from 333°C to 360°C. The temperature range is more preferably 334°C or higher, still more preferably 335°C or higher, while more preferably 355°C or lower, still more preferably 350°C or lower.

The presence of a melting point within the above range indicates that the fluororesin B2 (preferably a non-melt-flowable fluororesin, more preferably PTFE) has no history of being heated to the melting point or higher.

In addition to the above melting point, the fluororesin C may also have a melting point within a temperature range lower than 333°C.

The fluororesin B2 may be the same resin as the fluororesin B1 in the first production method.

The fluororesin B2 is preferably a non-melt-flowable fluororesin, more preferably PTFE (high molecular weight PTFE).

The fluororesin B2 may be a melt-flowable fluororesin and preferably includes at least one selected from the group consisting of PFA, FEP, ETFE, EFEP, PCTFE, a CTFE/TFE copolymer, a CTFE/TFE/PAVE copolymer, an Et/CTFE copolymer, PVF, PVdF, a VdF/TFE copolymer, a VdF/HFP copolymer, a VdF/TFE/HFP copolymer, a VdF/HFP/(meth)acrylic acid copolymer, a VdF/CTFE copolymer, a VdF/pentafluoropropylene copolymer, a VdF/PAVE/TFE copolymer, and low molecular weight PTFE. More preferred is at least one selected from the group consisting of PFA, FEP, and low molecular weight ETFE, still more preferred is at least one selected from the group consisting of PFA and FEP.

The fluororesin composition of the disclosure may contain particles of the fluororesin B2.

The particles of the fluororesin B2 are preferably primary particles of the fluororesin B2. Preferably, the primary particles do not form secondary particles.

The particles of the fluororesin B2 preferably have an average primary particle size of 1 um or smaller. The average primary particle size is more preferably 500 nm or smaller, still more preferably 450 nm or smaller, further preferably 400 nm or smaller, further more preferably 350 nm or smaller, particularly preferably 300 nm or smaller. The average primary particle size is preferably 10 nm or greater, more preferably 25 nm or greater, still more preferably 50 nm or greater, further preferably 100 nm or greater, particularly preferably 150 nm or greater.

The average primary particle size is determined as follows. Specifically, an aqueous dispersion adjusted to have a solid concentration of 0.5% by mass is dropped onto aluminum foil and dried at 150°C for one hour so that water is removed. The residue is then observed using a scanning electron microscope (SEM) and 100 or more particles are randomly selected. The average of the diameters of these particles is defined as the average primary particle size.

Alternatively, the average primary particle size may be an average of the diameters of 100 or more primary particles randomly selected by observing the fluororesin composition using a scanning electron microscope (SEM).

In an embodiment of the fluororesin composition of the disclosure, the particles of the fluororesin B2 preferably have an average aspect ratio of 2.0 or lower, more preferably 1.7 or lower, still more preferably 1.6 or lower, further preferably 1.5 or lower, even more preferably 1.4 or lower, particularly preferably 1.3 or lower. The average aspect ratio may be 1.0 or higher.

The average aspect ratio is determined as follows. Specifically, the fluororesin composition is observed using a scanning electron microscope (SEM) and 100 or more primary particles randomly selected are imaged. The ratio of the major and minor axes of each particle is then obtained and the average thereof is defined as the average aspect ratio.

In an embodiment of the fluororesin composition of the disclosure, the particles of the fluororesin B2 having an aspect ratio of 2.5 or higher are preferably in a proportion of 0.5% or more, more preferably 1.0% or more, still more preferably 1.5% or more, particularly preferably 2.0% or more of all particles of the fluororesin B2. The proportion is also preferably 20% or less, more preferably 15% or less, still more preferably 10% or less.

The proportion is determined as follows. Specifically, the fluororesin composition is observed using a scanning electron microscope (SEM) and 100 or more primary particles randomly selected are imaged. The aspect ratio of each particle is then calculated and the proportion of the particles of interest is defined relative to the total number of the particles selected.

In order to much reduce coloring and to much improve the tensile properties, the fluororesin A2 and the fluororesin B2 preferably have a mass ratio (A2/B2) of 1/99 to 90/10.

The mass ratio A2/B2 is more preferably 3/97 or higher, still more preferably 5/95 or higher, further preferably 10/90 or higher, particularly preferably 15/85 or higher. The mass ratio A2/B2 is also more preferably 85/15 or lower, still more preferably 80/20 or lower, further preferably 75/25 or lower, particularly preferably 70/30 or lower.

The total amount of the fluororesins A2 and B2 in the fluororesin composition of the disclosure is preferably 80% by mass or more, more preferably 85% by mass or more, still more preferably 90% by mass or more, further preferably 95% by mass or more, particularly preferably 98% by mass or more of the fluororesin composition.

The fluororesin composition of the disclosure contains microparticles having a primary particle size of 1 um or smaller.

The microparticles are particles of the fluororesin(s) to form the fluororesin composition, which may be particles of at least one selected from the group consisting of the fluororesin A2 and the fluororesin B2, and are preferably particles of the fluororesin B2.

The microparticles may be primary particles and are preferably primary particles of the fluororesin B2.

The microparticles preferably have a primary particle size of 500 nm or smaller, more preferably 450 nm or smaller, still more preferably 400 nm or smaller, further preferably 350 nm or smaller, particularly preferably 300 nm or smaller. The primary particle size is preferably 10 nm or greater, more preferably 25 nm or greater, still more preferably 50 nm or greater, further preferably 100 nm or greater, particularly preferably 150 nm or greater.

The primary particle size is an average of the diameters of 100 or more microparticles randomly selected by observing the fluororesin composition using a scanning electron microscope (SEM).

In an embodiment of the fluororesin composition of the disclosure, the microparticles preferably have an average aspect ratio of 2.0 or lower, more preferably 1.7 or lower, still more preferably 1.6 or lower, further preferably 1.5 or lower, even more preferably 1.4 or lower, particularly preferably 1.3 or lower. The aspect ratio may be 1.0 or higher.

The average aspect ratio is determined as follows. Specifically, the fluororesin composition is observed using a scanning electron microscope (SEM) and 100 or more microparticles randomly selected are imaged. The ratio of the major and minor axes of each particle is then obtained and the average thereof is defined as the average aspect ratio.

In an embodiment of the fluororesin composition of the disclosure, the microparticles having an aspect ratio of 2.5 or higher are preferably in a proportion of 0.5% or more, more preferably 1.0% or more, still more preferably 1.5% or more, particularly preferably 2.0% or more of all microparticles. The proportion is also preferably 20% or less, more preferably 15% or less, still more preferably 10% or less.

The proportion is determined as follows. Specifically, the fluororesin composition is observed using a scanning electron microscope (SEM) and 100 or more microparticles randomly selected are imaged. The aspect ratio of each particle is then calculated and the proportion of the particles of interest is defined relative to the total number of the microparticles selected.

The fluororesin composition of the disclosure preferably contains a coarse powder having a particle size of 5 um or greater.

The coarse powder is a mass of particles of the fluororesin(s) to form the fluororesin composition, which may be particles of at least one selected from the group consisting of the fluororesin A2 and the fluororesin B2, and are preferably particles of the fluororesin A2.

The coarse powder may be a mass of secondary particles and may be mass of secondary particles of the fluororesin A2.

The coarse powder preferably has a particle size of 10 um or greater, while preferably 600 um or smaller, more preferably 500 um or smaller, still more preferably 400 um or smaller.

The particle size of the coarse powder is the particle size detected in the volume-based distribution determined in dry measurement using a laser diffraction particle size distribution analyzer (LS13 320) available from Beckman Coulter, Inc. at a vacuum pressure of 20 mH₂O.

In the fluororesin composition of the disclosure, preferably, the microparticles adhere to surfaces of the coarse powder with 60% or less of the surfaces of the coarse powder being exposed. This can much reduce coloring and much improve the tensile properties such as tensile strength at break and tensile strain at break.

The percentage of the exposed surfaces is more preferably 55% or less, still more preferably 50% or less.

The percentage of the exposed surfaces is calculated as follows. Specifically, the fluororesin composition is observed using a scanning electron microscope (SEM) to yield a 5000x image and the area of the surfaces of the coarse powder not covered with the microparticles is divided by the area of the surfaces of the coarse powder.

The fluororesin composition of the disclosure preferably has an average secondary particle size of 5 to 500 um. The average secondary particle size is more preferably 10 um or greater, still more preferably 25 um or greater, while more preferably 450 um or smaller, still more preferably 400 um or smaller.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

The fluororesin composition of the disclosure preferably has a D90 of 50 um or greater, more preferably 70 um or greater, still more preferably 100 um or greater, while preferably 800 um or smaller, more preferably 700 um or smaller, still more preferably 650 um or smaller.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

In order to much reduce coloring and to much improve the tensile properties, the fluororesin composition of the disclosure preferably contains a nonionic surfactant in an amount of 1.0% by mass or less, more preferably 0.9% by mass or less, still more preferably 0.8% by mass or less, further preferably 0.7% by mass or less, particularly preferably 0.6% by mass or less of the fluororesin composition. The lower limit thereof may be, but is not limited to, lower than the detection limit or may be 1000 ppm by mass.

The amount of the nonionic surfactant is determined as follows. Specifically, 1 g of the fluororesin composition freeze-pulverized is ultrasonically extracted in 10 mL of methanol at 60°C and the amount is determined in conformity with "Appended Table 28 of Method specified by the Minister of Health, Labour and Welfare based on the provisions of the Ministerial Order on water quality standards, Public Notice of the Ministry of Health, Labour and Welfare No. 261 of 2003".

The fluororesin composition of the disclosure also preferably contains no nonionic surfactant and also preferably contains no hydrocarbon surfactant.

Examples of the nonionic surfactant and the hydrocarbon surfactant include those mentioned as examples for the first production method.

With regard to the amount of matter obtained by ultrasonically extracting 1 g of the freeze-pulverized fluororesin composition in 10 mL of methanol at 60°C and determining the absorbance in conformity with "Appended Table 28 of Method specified by the Minister of Health, Labour and Welfare based on the provisions of the Ministerial Order on water quality standards, Public Notice of the Ministry of Health, Labour and Welfare No. 261 of 2003", this amount in the fluororesin composition of the disclosure is preferably 1.0% by mass or less, more preferably 0.9% by mass or less, still more preferably 0.8% by mass or less, further preferably 0.7% by mass or less, particularly preferably 0.6% by mass or less of the fluororesin composition so as to much reduce coloring and to much improve the tensile properties. The lower limit thereof may be, but is not limited to, lower than the detection limit or may be 1000 ppm by mass.

The amount of matter within this range indicates that no nonionic surfactant is contained in the fluororesin composition or, even if contained, a significantly small amount thereof is contained therein.

In order to achieve more reduced coloring and more improved tensile properties, the fluororesin composition of the disclosure preferably contains a low molecular weight fluorine-containing compound in an amount (total amount) of 1 ppm by mass or less, more preferably 500 ppb by mass or less, still more preferably 100 ppb by mass or less, further preferably 50 ppb by mass or less, even more preferably 25 ppb by mass or less, particularly preferably 10 ppb by mass or less, more particularly preferably 5 ppb by mass or less, still more particularly preferably 1 ppb by mass or less, most preferably less than 1 ppb by mass of the fluororesin composition.

The amount of the low molecular weight fluorine-containing compound is determined using a liquid chromatograph-mass spectrometer (LC/MS/MS) on a Soxhlet extract of a sample with methanol.

Examples of the low molecular weight fluorine-containing compound include those mentioned as examples for the first production method.

The fluororesin composition of the disclosure may further contain a filler.

Examples of the filler include those mentioned as examples of a filler to be used in the first and second production methods.

The filler may be contained in an amount of 0 to 80% by mass of the fluororesin composition, for example.

The fluororesin composition of the disclosure may be in any form, and is preferably in the form of powder.

The fluororesin composition of the disclosure can be suitably produced by the aforementioned first or second production method.

The fluororesin composition obtainable by the first or second production method and the fluororesin composition of the disclosure each preferably have a tensile strength at break of 11 MPa or higher, more preferably 13 MPa or higher, still more preferably 15 MPa or higher. The upper limit thereof may be, but is not limited to, 40 MPa, for example.

The tensile strength at break is determined as follows. Specifically, 35 g of the fluororesin composition is put into a ϕ100-mm mold and compression-molded at a pressure of 30 MPa for one minute. The temperature is increased from room temperature to 300°C over three hours, then increased from 300°C to 370°C over four hours, then maintained at 370°C for 12 hours, then decreased to 300°C over five hours, and then decreased to room temperature over one hour, whereby a molded article is fired. The molded article is then cut into a dumbbell, which is used to measure the tensile strength at break in conformity with ASTM D1708.

The fluororesin composition obtainable by the first or second production method and the fluororesin composition of the disclosure each preferably have a tensile strain at break of 150% or higher, more preferably 200% or higher, still more preferably 250% or higher, further preferably 300% or higher, particularly preferably 350% or higher. The upper limit thereof may be, but is not limited to, 600%, for example.

The tensile strain at break is determined as follows. Specifically, 35 g of the fluororesin composition is put into a ϕ100-mm mold and compression-molded at a pressure of 30 MPa for one minute. The temperature is increased from room temperature to 300°C over three hours, then increased from 300°C to 370°C over four hours, then maintained at 370°C for 12 hours, then decreased to 300°C over five hours, and then decreased to room temperature over one hour, whereby a molded article is fired. The molded article is then cut into a dumbbell, which is used to measure the tensile strength at break in conformity with ASTM D1708.

The fluororesin composition obtainable by the first or second production method and the fluororesin composition of the disclosure each preferably have a yellowness index (YI) of -1.0 or lower. This can lead to much reduced coloring and much better appearance. The yellowness index is more preferably -1.5 or lower, still more preferably - 2.0 or lower. The lower limit may be, for example, but is not limited to, -15.

The yellowness index is determined as follows. Specifically, 35 g of the fluororesin composition is put into a ϕ100-mm mold and compression-molded at a pressure of 30 MPa for one minute. The temperature is increased from room temperature to 300°C over three hours, then increased from 300°C to 370°C over four hours, then maintained at 370°C for 12 hours, then decreased to 300°C over five hours, and then decreased to room temperature over one hour, whereby a fired sample is prepared. The yellowness index of this sample is determined using a spectrophotometer CM-5 available from Konica Minolta, Inc. with Illuminant C and a viewing angle of 2° in conformity with ASTM E313-96.

The fluororesin composition obtainable by the first or second production method and the fluororesin composition of the disclosure can each suitably be used as a molding material. The fluororesin composition may be molded, for example, by compression molding, ram extrusion molding, or isostatic molding, although not limited thereto. Preferred among these is compression molding.

The disclosure also provides a molded article obtainable by compression-molding and firing a fluororesin composition obtainable by the first or second production method or the fluororesin composition of the disclosure.

The molded article of the disclosure suffers less coloring and has excellent tensile properties while containing a fluororesin having a history of being heated to the melting point thereof or higher.

The compression molding may be performed, for example, by maintaining the fluororesin composition at a pressure of 10 to 50 MPa for 1 minute to 30 hours.

The firing may be performed, for example, by heating the compression-molded article at a temperature of 350°C to 380°C for 0.5 to 50 hours.

The molded article of the disclosure preferably has a tensile strength at break of 11 MPa or higher, more preferably 13 MPa or higher, still more preferably 15 MPa or higher. The upper limit thereof may be, but is not limited to, 40 MPa, for example.

The tensile strength at break is measured in conformity with ASTM D1708.

The molded article of the disclosure preferably has a tensile strain at break of 150% or higher, more preferably 200% or higher, still more preferably 250% or higher, further preferably 300% or higher, particularly preferably 350% or higher. The upper limit thereof may be, but is not limited to, 600%, for example.

The tensile strain at break is measured in conformity with ASTM D1708.

The molded article of the disclosure preferably has a yellowness index of 0 or lower, more preferably -1.0 or lower, still more preferably -1.5 or lower, particularly preferably -2.0 or lower. The lower limit may be, for example, but is not limited to, -15.

The yellowness index is determined in conformity with ASTM E313-96.

The molded article obtainable from a fluororesin obtainable by the first or second production method and the molded article obtainable from the fluororesin composition of the disclosure can each suitably be used for a lining sheet, packing, gasket, diaphragm valve, heat-resistant electric wire, heat-resistant insulating tape for vehicle motors or generators, release sheet, sealant, casing, sleeve, bellows, hose, piston ring, butterfly valve, rectangular tank, wafer carrier, and the like.

It should be appreciated that a variety of modifications and changes in the structure and other details may be made to the aforementioned embodiments without departing from the spirit and scope of the claims.

### EXAMPLES

The disclosure is described in more detail below with reference to examples, but is not limited to these examples.

The physical properties were determined by the following methods.

### (Melting point)

The melting point was determined as the temperature corresponding to the local minimum on a heat-of-fusion curve obtained by differential scanning calorimetry (DSC) at a temperature-increasing rate of 10°C/min using X-DSC7000 available from Hitachi High-Tech Science Corp. In the case where one melting peak included two or more local minimums, each minimum was defined as a melting point.

### (Composition of monomers in fluororesin)

The composition was determined by ¹⁹F-NMR.

### (Secondary particle size of powder)

The secondary particle size was determined based on the particle size distribution by volume determined in dry measurement using a laser diffraction particle size distribution analyzer (LS13 320) available from Beckman Coulter, Inc. at a vacuum pressure of 20 mH₂O. The average secondary particle size was defined as equivalent to the particle size corresponding to 50% of the cumulative volume in the particle size distribution. The particle size corresponding to 10% was defined as D10 and the particle size corresponding to 90% was defined as D90.

### (Average primary particle size)

The average primary particle size was determined as follows. Specifically, an aqueous dispersion adjusted to have a solid concentration of 0.5% by mass was dropped onto aluminum foil and dried at 150°C for one hour so that water was removed. The residue was then observed using a scanning electron microscope (SEM) and 100 or more particles were randomly selected. The average of the diameters of these particles was defined as the average primary particle size.

The primary particle size of the powder after mixing was determined as an average of the diameters of 100 or more primary particles randomly selected by observing the powder using a scanning electron microscope.

### (Solid concentration of aqueous dispersion)

The solid concentration (P% by mass) in the aqueous dispersion was calculated as follows. Specifically, about 1 g (X g) of a sample was put into a 5-cm-diameter aluminum cup and heated at 110°C for 30 minutes, so that a heating residue (Y g) was obtained. The resulting heating residue (Y g) was further heated at 300°C for 30 minutes, so that a heating residue (Z g) was obtained. The solid concentration was determined by the formula: P = (Z/X) × 100 (% by mass).

### (Amount of nonionic surfactant in aqueous dispersion)

The amount (N% by mass) of the nonionic surfactant contained in the aqueous dispersion relative to the PTFE was calculated as follows. Specifically, about 1 g (X g) of a sample was put into a 5-cm-diameter aluminum cup and heated at 110°C for 30 minutes, so that a heating residue (Y g) was obtained. The resulting heating residue (Y g) was further heated at 300°C for 30 minutes, so that a heating residue (Z g) was obtained. The amount was determined by the formula: N = [(Y-Z)/Z] × 100 (% by mass).

The average aspect ratio was determined as follows. Specifically, an aqueous dispersion of the fluororesin diluted to have a solid concentration of 0.5% by mass was observed using a scanning electron microscope (SEM) and 100 or more particles randomly selected were imaged. The ratio of the major and minor axes of each particle was then obtained and the average thereof was defined as the average aspect ratio.

In the case of a powder after mixing, this powder was observed using a scanning electron microscope (SEM) and, with respect to 100 or more primary particles randomly selected, the ratio of the major and minor axes of each particle was obtained and the average thereof was determined as the average aspect ratio.

The proportion of the particles having an aspect ratio of 2.5 or higher was determined as follows. Specifically, an aqueous dispersion of the fluororesin diluted to have a solid concentration of 0.5% by mass was observed using a scanning electron microscope (SEM) and 100 or more particles randomly selected were imaged. The aspect ratio of each particle was then calculated and the proportion of the particles of interest was defined relative to the total number of the particles selected.

In the case of a powder after mixing, this powder was observed using a scanning electron microscope (SEM) and, with respect to 100 or more primary particles randomly selected, the aspect ratio of each particle was calculated and the proportion of the particles of interest was determined relative to the total number of the particles selected.

### (Apparent density)

The apparent density was determined in conformity with JIS K 6891.

### (Standard specific gravity (SSG))

The SSG was determined by the immersion method in conformity with ASTM D792 using a sample molded in conformity with ASTM D4895-89.

### (Area proportion of exposed portion)

The target powder was observed using a scanning electron microscope (SEM). In an image at 5000x, the area of the surfaces of coarse powder having a particle size of 5 um or greater not covered with microparticles having a primary particle size of 1 um or smaller is divided by the area of the surfaces of the coarse powder, whereby the area ratio is calculated. An average of six images was determined as the area ratio.

### (YI value)

The yellowness index was determined as follows. Specifically, 35 g of powder was put into a ϕ100-mm mold and compression-molded at a pressure of 30 MPa for one minute. The temperature was increased from room temperature to 300°C over three hours, then increased from 300°C to 370°C over four hours, then maintained at 370°C for 12 hours, then decreased to 300°C over five hours, and then decreased to room temperature over one hour, whereby a fired sample was prepared. The yellowness index of this sample was determined using a spectrophotometer CM-5 available from Konica Minolta, Inc. with Illuminant C and a viewing angle of 2° in conformity with ASTM E313-96.

### (Tensile test)

A molded article was prepared by compression molding and firing under the same conditions as described above and was cut into a dumbbell, which was subjected to the tensile test in conformity with ASTM D1708. Thereby, the tensile strength at break and the tensile strain at break were measured.

### (Composition of monomers in fluororesin composition)

The composition was determined by calculation based on the composition of materials.

### (Amount of nonionic surfactant contained in powder)

The amount was determined as follows. Specifically, 1 g of powder freeze-pulverized was ultrasonically extracted in 10 mL of methanol at 60°C and the amount was determined in conformity with "Appended Table 28 of Method specified by the Minister of Health, Labour and Welfare based on the provisions of the Ministerial Order on water quality standards, Public Notice of the Ministry of Health, Labour and Welfare No. 261 of 2003".

### (Amount of low molecular weight fluorine-containing compound)

First, 1 g of a fluororesin composition (powder) was weighed and combined with 10 mL of a 0.3% solution (A) of ammonium hydroxide in methanol, which was prepared from ammonia water and methanol. A sample bottle was placed in an ultrasonic cleaner controlled to a temperature of 60°C and sonicated for two hours, whereby an extract was obtained. The fluorine-containing compound in the extract was analyzed using a liquid chromatograph-mass spectrometer (1290 Infinity II LC system and 6530 time-of-flight mass spectrometer available from Agilent). The specifications of the measurement devices and the measurement conditions are shown in Table 1. Based on the exact masses, the peaks of compounds identified as fluorine compounds having a molecular weight of 800 or lower were extracted, so that an extracted chromatogram was obtained. Four levels of aqueous solutions were prepared using a perfluorooctanoic acid-containing aqueous solution having a known concentration. The aqueous solutions of the respective levels were analyzed and the relationship of the levels and the areas corresponding to the levels were plotted, drawing a calibration curve. Using the extracted chromatogram and the calibration curve, the amount, as an equivalent to perfluorooctanoic acid, of the fluorine-containing compound having a molecular weight of 800 or lower in the extract was calculated.

**[Table 1]**

| LC section | | | | |
|---|---|---|---|---|
| | Device | 1290 Infinity II, Agilent | | |
| | Column | EclipsePulsC18 RRHD 1.8 µm 2.1 × 50 mm, Agilent | | |
| | Mobile phase | A 20 mM CH₃COONH₄/H₂O | | |
| | | B CH₃CN | | |
| | | | 0 to 1 min | A:B = 90:10 |
| | | | 1 to 6 min | A:B = 90:10 to 5:95 Linear gradient |
| | | | 6 to 12 min | A:B = 5:95 |
| | Flow rate | 0.3 ml | | |
| | Column temp. | 40°C | | |
| | Amount of sample | 5 µL | | |

| MS section | | | | |
|---|---|---|---|---|
| | Device | 6530 LC/Q-TOF, Agilent | | |
| | Measurement mode | Electrospray ionization | | |
| | Ionization mode | Negative | | |

### Synthesis Example 1 (synthesis of perfluoroether carboxylic acid ammonium salt A)

A 1-L autoclave was purged with nitrogen and charged with 16.5 g of dehydrated tetramethylurea and 220 g of diethylene glycol dimethyl ether, followed by cooling. Next, 38.5 g of carbonyl fluoride and then 100 g of hexafluoropropylene oxide were fed thereto, followed by stirring. Then, 38.5 g of carbonyl fluoride and 100 g of hexafluoropropylene oxide were again added thereto. The same amounts of carbonyl fluoride and hexafluoropropylene oxide were fed thereto. After the reaction was completed, a reaction liquid mixture was collected. The mixture was separated and the lower layer reaction product was obtained.

A 6-L autoclave was charged with 1000 mL of tetraglyme and CsF (75 g) and purged with nitrogen. The autoclave was cooled and charged with 2100 g of the reaction product obtained above. Hexafluoropropylene oxide was then introduced into the autoclave, so that the reaction was initiated. Finally, 1510 g of hexafluoropropylene oxide was fed thereto. The contents were collected and separated using a separating funnel into an upper layer and a lower layer. The upper layer weighed 1320 g and the lower layer weighed 3290 g. The lower layer was rectified for isolation.

Next, 1000 g of the isolated target was combined with 1000 g of pure water and hydrolyzed. The product was then separated using a separating funnel and the organic layer (lower layer) was collected. The collected solution was washed with sulfuric acid water. The resulting solution was further simply distilled for purification. The resulting purified compound was mixed with 76 g of a 28% by mass ammonia aqueous solution and 600 g of pure water to prepare an aqueous solution. To this aqueous solution was added dropwise 500 g of the product obtained by the above simple distillation. The dropwise addition was followed by addition of a 28% by mass ammonia aqueous solution, so that the pH was adjusted to 7. The product was freeze-dried, whereby a perfluoroether carboxylic acid ammonium salt A was obtained.

### Production Example 1 (production of fluororesin powder A-1)

A coarse powder of homo-PTFE obtained by suspension polymerization of a TFE monomer alone was pulverized using a pulverizer to provide a PTFE molding powder (standard specific gravity (SSG): 2.159, melting point: 345.0°C). Then, 35 g of this molding powder was compression-molded in a ϕ100-mm mold at 30 MPa for one minute and fired at 370°C for three hours. Thereby, a molded article was obtained. The resulting molded article was cut and pulverized using a pulverizer, whereby a fluororesin powder A-1 was obtained. The fluororesin powder A-1 had a melting point of 328°C, an average secondary particle size of 23 um, a D10 of 8 um, a D90 of 48 um, and an apparent density of 1.81 g/ml.

### Production Example 2 (production of PTFE aqueous dispersions B-1 to B-5 containing PTFE particles)

In a 6-L capacity stainless steel autoclave equipped with a stirring blade, the perfluoroether carboxylic acid ammonium salt A was used to perform a known emulsion polymerization technique, whereby a PTFE aqueous dispersion B-1 was obtained containing homo-PTFE particles consisting only of a TFE monomer.

The resulting PTFE aqueous dispersion B-1 had a solid concentration of 25% by mass, an average primary particle size of 260 nm, a standard specific gravity (SSG) of 2.200, a melting point of 336.8°C, and an average aspect ratio of the primary particles of 1.9. In this aqueous dispersion, the proportion of the primary particles having an aspect ratio of 2.5 or higher was 2%.

The PTFE aqueous dispersion B-1 was combined with a nonionic surfactant TDS-80 (available from DKS Co., Ltd.), whereby a dispersion was prepared having a nonionic surfactant concentration of 10 parts by mass relative to 100 parts by mass of PTFE. Subsequently, a 20-mm-diameter column was charged with 250 mL of OH anion exchange resin (trade name: Amberjet AMJ4002 available from Rohm and Haas) and the dispersion was passed therethrough at SV = 1. The aqueous dispersion obtained after the permeation was combined with a nonionic surfactant TDS-80 in an amount of 16 parts by mass of a nonionic surfactant TDS-80 relative to 100 parts by mass of PTFE. The mixture was maintained at 65°C for three hours and thereby separated into a supernatant layer and a condensed layer. The condensed layer was collected, whereby a PTFE aqueous dispersion B-2 was obtained.

The resulting PTFE aqueous dispersion B-2 had a solid concentration of 68.3% by mass and contained a nonionic surfactant in an amount of 2.7% by mass relative to PTFE.

The PTFE aqueous dispersion B-2 was combined with a nonionic surfactant TDS-80 in an amount of 6.0% by mass relative to PTFE. The mixture was further combined with deionized water and ammonia water, whereby a PTFE aqueous dispersion B-3 was obtained. The solid concentration was 60.2% by mass and the amount of the nonionic surfactant contained was 6.0% by mass relative to PTFE.

The PTFE aqueous dispersion B-3 was diluted with pure water to a solid concentration of 30% by mass, whereby a PTFE aqueous dispersion B-4 was prepared.

The PTFE aqueous dispersion B-3 was diluted with pure water to a solid concentration of 15% by mass, whereby a PTFE aqueous dispersion B-5 was prepared.

### Production Example 3 (production of PTFE aqueous dispersions B-6)

In a 6-L capacity stainless steel autoclave equipped with a stirring blade, the perfluoroether carboxylic acid ammonium salt A was used to perform a known emulsion polymerization technique, whereby a PTFE aqueous dispersion B-6 was obtained containing PPVE-modified PTFE particles containing TFE and perfluoropropyl vinyl ether (PPVE).

The resulting PTFE aqueous dispersion B-6 had a solid concentration of 30% by mass, an average primary particle size of 261 nm, a standard specific gravity (SSG) of PTFE of 2.175, a melting point of 334.6°C, and an average aspect ratio of the primary particles of 1.22. In this aqueous dispersion, the proportion of the primary particles having an aspect ratio of 2.5 or higher was 0.7% and a PPVE unit content of 0.14% by mass.

### Example 1

First, 50 g of the fluororesin powder A-1 and 167 g of the PTFE aqueous dispersion B-4 were shake-mixed in a flask. The mixture was combined with methanol for coagulation. The product was filtered and the residue was washed with water and methanol, whereby PTFE wet powder was collected.

The resulting PTFE wet powder was dried in an electric furnace at 150°C for 15 hours, so that water was removed.

The dry powder was pulverized using Wonder Crusher WC-3 at a rotational frequency of 2900 rpm for 60 seconds, whereby a PTFE powder was obtained.

The PTFE powder satisfied that the proportion of the exposed portions of the coarse powder having a particle size of 5 um or greater was 44%, and had melting points of 330°C and 337°C, a YI value of -3.5, a tensile strength at break of 14 MPa, and a tensile strain at break of 389%.

### Example 2

A PTFE powder was obtained as in Example 1 except that 333 g of the PTFE aqueous dispersion B-5 was used instead of the PTFE aqueous dispersion B-4. The PTFE powder satisfied that the proportion of the exposed portions of the surfaces of the coarse powder having a particle size of 5 um or greater was 49%, and had melting points of 329°C and 337°C, a YI value of -3.6, a tensile strength at break of 15 MPa, and a tensile strain at break of 421%.

### Example 3

A PTFE powder was obtained as in Example 1 except that 200 g of the PTFE aqueous dispersion B-1 was used instead of the PTFE aqueous dispersion B-4. The PTFE powder satisfied that the proportion of the exposed portions of the surfaces of the particles having a particle size of 5 um or greater was 48%, and had melting points of 329°C and 337°C, a YI value of -1.2, a tensile strength at break of 17 MPa, and a tensile strain at break of 326%.

### Example 4

A PTFE powder was obtained as in Example 1 except that 83 g of the PTFE aqueous dispersion B-3 was used instead of the PTFE aqueous dispersion B-4. The PTFE powder satisfied that the proportion of the exposed portions of the surfaces of the coarse powder having a particle size of 5 um or greater was 86%, had melting points of 329°C and 337°C, a YI value of -0.4, a tensile strength at break of 12 MPa, a tensile strain at break of 278%, and contained 1 ppm by mass or lower of a low molecular weight fluorine-containing compound (fluorine-containing surfactant containing an anionic portion having a molecular weight of 800 or lower).

### Example 5

A PTFE powder was obtained as in Example 1 except that the PTFE aqueous dispersion B-6 was used instead of the PTFE aqueous dispersion B-4. The PTFE powder satisfied that the proportion of the exposed portions of the surfaces of the coarse powder having a particle size of 5 um or greater was 46%, and had melting points of 329°C and 336°C, a PPVE unit content of 0.07% by mass, a tensile strength at break of 30 MPa, and a tensile strain at break of 506%.

### Comparative Example 1

Using 35 g of the fluororesin powder A-1 (melting point 328°C), the measurements were performed as in Example 1 to find that the YI value was 2.0, the tensile strength at break was 9 MPa, and the tensile strain at break was 145%.

### Example 6

A PTFE powder was obtained as in Example 1 except that the fluororesin powder A-1 was changed to 90 g and the PTFE aqueous dispersion B-6 was changed to 33.4 g. The PTFE powder satisfied that the proportion of the exposed portions of the surfaces of the coarse powder having a particle size of 5 um or greater was 57%, and had melting points of 329°C and 336°C, a PPVE unit content of 0.014% by mass, a tensile strength at break of 13 MPa, and a tensile strain at break of 317%.

## Claims

1. A method for producing a fluororesin composition, the method comprising:
mixing a powder of a fluororesin A1 having a history of being heated to a melting point thereof or higher and an aqueous dispersion containing particles of a fluororesin B1 and having a solid concentration of 70% by mass or lower to provide a mixture; and
drying the mixture to provide a fluororesin composition.

2. The production method according to claim 1,
wherein the solid concentration of the aqueous dispersion is 50% by mass or lower.

3. The production method according to claim 1 or 2,
wherein the aqueous dispersion contains a hydrocarbon surfactant.

4. The production method according to claim 3,
wherein the hydrocarbon surfactant is a fluorine-free hydrocarbon surfactant.

5. The production method according to claim 3 or 4,
wherein the hydrocarbon surfactant is an anion surfactant or a nonionic surfactant.

6. The production method according to any one of claims 1 to 5,
wherein the aqueous dispersion contains a nonionic surfactant in an amount of 12% by mass or less relative to a solid content of the aqueous dispersion.

7. The production method according to claim 6,
wherein the nonionic surfactant contains an ether bond.

8. The production method according to claim 6,
wherein the nonionic surfactant includes at least one selected from the group consisting of an ether nonionic surfactant, a polyoxyethylene derivative, an ester nonionic surfactant, an amine nonionic surfactant, and a derivative thereof.

9. A method for producing a fluororesin composition, the method comprising:
mixing a powder of a fluororesin A1 having a history of being heated to a melting point thereof or higher and an aqueous dispersion containing particles of a fluororesin B1 and containing no hydrocarbon surfactant to provide a mixture; and
drying the mixture to provide a fluororesin composition.

10. The production method according to any one of claims 1 to 9,
wherein the fluororesin A1 has at least one melting point within a temperature range lower than 333°C.

11. The production method according to any one of claims 1 to 10,
wherein the fluororesin A1 is polytetrafluoroethylene.

12. The production method according to any one of claims 1 to 11,
wherein the fluororesin composition is in the form of powder.

13. The production method according to any one of claims 1 to 12, further comprising:
mixing a filler.

14. A fluororesin composition obtainable by the production method according to any one of claims 1 to 13.

15. A fluororesin composition comprising:
a fluororesin A2 having a history of being heated to a melting point thereof or higher; and
a fluororesin B2 having no history of being heated to a melting point thereof or higher,
the fluororesin composition containing microparticles having a primary particle size of 1 um or smaller.

16. The fluororesin composition according to claim 15,
wherein the fluororesin composition has at least one melting point within a temperature range lower than 333°C and at least one melting point within a temperature range not lower than 333°C.

17. The fluororesin composition according to claim 15 or 16,
wherein the microparticles have an average aspect ratio of 2.0 or lower.

18. The fluororesin composition according to claim 15 or 16,
wherein microparticles having an aspect ratio of 2.5 or higher represent 0.5% or more of a total number of the microparticles.

19. The fluororesin composition according to any one of claims 15 to 18,
wherein the microparticles adhere to surfaces of a coarse powder having a particle size of 5 um or greater, with 60% or less of the surfaces of the coarse powder being exposed.

20. The fluororesin composition according to any one of claims 15 to 19,
wherein a low molecular weight fluorine-containing compound is contained in an amount of 1 ppm by mass or less of the fluororesin composition.

21. The fluororesin composition according to any one of claims 15 to 20,
wherein a nonionic surfactant is contained in an amount of 1.0% by mass or less of the fluororesin composition.

22. The fluororesin composition according to any one of claims 15 to 21, which is in the form of powder.

23. The fluororesin composition according to any one of claims 15 to 22,
wherein the fluororesin composition has a tensile strength at break of 11 MPa or higher.

24. The fluororesin composition according to any one of claim 15 to 23,
wherein the fluororesin composition has a tensile strain at break of 150% or higher.

25. The fluororesin composition according to any one of claim 15 to 24,
wherein the fluororesin composition has a yellowness index of -1.0 or lower.

26. The fluororesin composition according to any one of claims 15 to 25, further comprising a filler.

27. A molded article obtainable by compression-molding and firing the fluororesin composition according to any one of claims 15 to 26.
